# EUROPÄISCHE PATENTSCHRIFT

(11) **EP 1 394 168 B1**
(45) Veröffentlichungstag und Bekanntmachung des Hinweises auf die Patenterteilung: **21.05.2008**
(21) Anmeldenummer: 03018513.6
(22) Anmeldetag: 16.08.2003
(51) Int. Cl.: C07F 9/6574, C07F 15/00, B01J 31/22, C07B 53/00

(54) **Verfahren zur Herstellung von Phosphiten und Übergangsmetallkomplexen**
Process for the preparation of phosphites and complexes with transition metals
Procédé de préparation de phosphites et de complexes avec des métaux de transition

(30) Priorität: 30.08.2002 DE 10240803
(43) Veröffentlichungstag der Anmeldung: 03.03.2004
(73) Patentinhaber: Saltigo GmbH, 40764 Langenfeld (DE)
(72) Erfinder: Scholz, Ulrich, Dr., 45475 Mülheim (DE); Vogl, Erasmus, Dr., 51373 Leverkusen (DE); Gerlach, Arne, Dr., 51519 Odenthal (DE); Hassfeld, Jorma, 31582 Nienburg (DE); Meseguer, Benjamin, Dr., ES-43007 Tarragona (ES)
(74) Vertreter: Wichmann, Birgid

(56) Entgegenhaltungen:
- EP-A- 0 885 911
- WO-A-01/94278
- CAI, JUE XIAO ET AL: "A new convenient method for the resolution of 1,1'- binaphthalene- 2,2'-diol via a phosphite using (-)-menthol as resolving agent" CHINESE CHEMICAL LETTERS (2002), 13(7), 617-619, 2002, XP001172891
- BRUNEL J. M. ET AL.: "A new and efficient method for the resolution of 1,1'- binaphtalene-2,2'-diol" JOURNAL OF ORGANIC CHEMISTRY., Bd. 58, Nr. 25, - 3. Dezember 1993 (1993-12-03) Seiten 7313-7314, XP002262006 AMERICAN CHEMICAL SOCIETY. EASTON., US ISSN: 0022-3263
- BEDEKAR A. V. ET AL: "Intramolecular asymmetric olefination of binaphthyl phosphonate derivatives of 1,3-diketones" TETRAHEDRON: ASYMMETRY, ELSEVIER SCIENCE PUBLISHERS, AMSTERDAM, NL, Bd. 13, Nr. 7, 2. Mai 2002 (2002-05-02), Seiten 721-727, XP004354864 ISSN: 0957-4166
- CHEN W ET AL: "Enantioselective hydrogenation with inexpensive, easily available monodentate phosphite ligands" TETRAHEDRON LETTERS, ELSEVIER SCIENCE PUBLISHERS, AMSTERDAM, NL, Bd. 42, Nr. 15, 9. April 2001 (2001-04-09), Seiten 2897-2899, XP004232343 ISSN: 0040-4039
- CHEN W ET AL: "Asymmetric activation of conformationally flexible monodentate phosphites for enantioselective hydrogenation" TETRAHEDRON LETTERS, ELSEVIER SCIENCE PUBLISHERS, AMSTERDAM, NL, Bd. 42, Nr. 49, 3. Dezember 2001 (2001-12-03), Seiten 8737-8740, XP004321537 ISSN: 0040-4039

## Beschreibung

Die vorliegende Erfindung betrifft ein Verfahren zur Herstellung von Phosphiten und deren Übergangsmetallkomplexe sowie deren Anwendung in katalytischen Prozessen.

Phosphite haben insbesondere in der homogenen Katalyse eine große Bedeutung gewonnen, da sie durch Komplexierung an ein Übergangsmetall in der Lage sind, dessen katalytische Aktivität steuern und gegebenenfalls Stereoinformationen auf ein Substrat zu übertragen.

Es ist bekannt, dass insbesondere stereoisomerenangereicherte Phosphite, die sich von 2,2'-Binaphtholen ableiten, für asymmetrische Hydrierungen geeignet sind (siehe auch DE 100 27 505 A1 und Reetz, Mehler, Angew. Chem., Int. Ed. Engl. 2000, 39, 21, 3889). Dabei werden die stereoisomerenangereicherten Phosphite hergestellt, indem die entsprechenden stereoisomerenangereicherten 2,2'-Binaphthole zunächst mit Phosphortrichlorid zu Binaphthylphosphorigsäurechloriden und diese anschließend mit einem Monoalkohol umgesetzt werden.

Alternativ dazu kann die Umsetzung auch bei -78°C mit einem Monoalkoholat erfolgen (siehe auch P. H. Dussault, K.R. Woller, J. Org. Chem. 1997, 62, 1556-1559).

Nachteilig an diesen Verfahren ist der Umstand, dass zur Herstellung von Binaphthylphosphorigsäurechloriden sehr niedrige Temperaturen von -78°C angewandt werden müssen, die im technischen Maßstab nur aufwändig realisierbar sind.

Aus EP-A 729 965 ist unter anderem ein Verfahren zur Herstellung von Biphenylphosphiten bekannt, bei dem in einer Eintopfreaktion Phosphortrichlorid zunächst mit einem Monoalkohol und anschließend mit einem Biphenol umgesetzt wird. Nachteilig an diesem Verfahren ist, dass es im zweiten Schritt als Base ein Amin benötigt, das ein im Reaktionsmedium lösliches Hydrochlorid bildet. Weiterhin muss in hoher Konzentration und in aromatischen Kohlenwasserstoffen als Lösungsmittel gearbeitet werden, um hohe Ausbeuten zu erzielen. Für die technische Anwendung sind jedoch solche speziellen Bedingungen nicht akzeptabel, weil eine breite Anwendung für unterschiedlich substituierte Phosphite kaum möglich ist.

Aus J.-M. Brunel, G. Buono, J. Org. Chem. 1993, 58, 7313-7314 ist ein Verfahren zur Racematspaltung von 1,1'-Binaphtyl-2,2'-diol bekannt, das über die Herstellung von diastereomeren Binaphthylmenthylphosphiten verläuft, wobei zunächst Phosphortrichlorid mit einem Äquivalent L-Menthol umgesetzt und anschließend racemisches 1,1'-Binaphtyl-2,2'-diol zugegeben wird. Nachteilig an diesem Verfahren ist, dass das Zwischenprodukt nicht isoliert und daher nicht gereinigt wird.

CAI, JUE X1AO ET AL: "A new convenient method for the resolution of 1,1'-binaphthalene-2,2'-diol via a phosphite using (-)-menthol as resolving agent" CHINESE CHEMICAL LETTERS (2002), 13(7), 617-619,2002, XP001172891 offenbart ein Verfahren, bei dem PCl₃ mit (-)-Menthol ungesetzt wird, welches anschließend mit racemischem 1,1'-Binaphthyl-2,2'-diol zu einem DiastereomerenGemisch umgesetzt wird, welches getrennt und hydrolysiert wird unter Bildung der enantiomerenreinen Binaphthole, so dass das Verfahren letztendlich der optischen Auflösung der Binaphthole dient.
Die EP-A-0 885 911 offenbart ein 2-Komponentensystem für die ringöffnende Metathesepolymerisation, welches eine Ruthenium-Verbindung und ein tertiäres Phosphin umfasst.
Die WO 01194278 A offenbart chirale Monophosphite als als Liganden für die asymmetrische Synthese sowie bestimmte Übergangsmetall-Komplexverbindungen, die diese umfassen.

Es bestand daher das Bedürfnis, ein Verfahren zur Herstellung von Phosphiten und insbesondere stereoisomerenangereicherten Phosphiten bereitzustellen, das hohe Ausbeuten und hohe Produktreinheiten gewährleistet.

Es wurde nun ein Verfahren zur Herstellung von Verbindungen der Formel (I) gefunden, 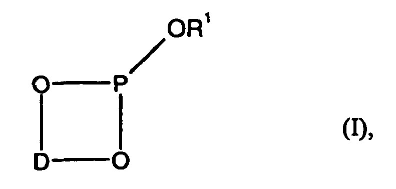 in der
- D: für einen unsubstituierten oder substituierten 1,1'-Biphenyl-2,2'-diyl- oder 1,1'-Binaphthyl-2,2'-diyl-Rest steht und
- R¹: für einen Rest steht, der ausgewählt ist aus der Gruppe C₁-C₁₂-Alkyl, C₂-C₁₂-Alkenyl, C₁-C₁₂-Halogenalkyl, C₅-C₁₅-Arylalkyl und C₄-C₁₄-Aryl wobei die Auflage gilt, dass
- R¹: eine Molmasse von 215 oder weniger aufweist,
dadurch gekennzeichnet, dass
• in einem Schritt a)
   - Verbindungen der Formel (II),

      PHal₃ (II)

      in der Hal jeweils unabhängig voneinander, vorzugsweise jedoch identisch für Chlor, Brom oder Iod, bevorzugt für Chlor steht,
   - gegebenenfalls in Gegenwart einer Base
   - mit Verbindungen der Formel (III),

      R¹-OH (III)

      in der
      - R¹: die vorstehend genannte Bedeutung besitzt
      zunächst zu Verbindungen der Formel (IV) umgesetzt werden

      R¹OPHal₂ (IV)
      in der
      - R¹ und Hal: die vorstehend genannte Bedeutung besitzen,
• in einem Schritt b)
   die gemäß a) erhaltenen Verbindungen der Formel (IV) destillatiert und dabei gereinigt werden und
• in einem Schritt c)
   die gemäß b) gereinigten Verbindungen der Formel (IV)
   - gegebenenfalls und vorzugsweise in Gegenwart einer Base
   - mit Verbindungen der Formel (V)

      D(OH)₂ (V)

      in der D die vorstehend genannte Bedeutung besitzt
zu Verbindungen der Formel (I) umgesetzt werden.

Im Rahmen der Erfindung können alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Weise kombiniert werden.

**Alkyl** beziehungsweise **Alkylen** beziehungsweise **Alkenyl** beziehungsweise **Alkoxy** bedeutet jeweils unabhängig einen geradkettigen, cyclischen, verzweigten oder unverzweigten Alkyl- beziehungsweise Alkylen- beziehungsweise Alkenylbeziehungsweise Alkoxy-Rest, wobei die genannten Reste gegebenenfalls durch C₁-C₄-Alkoxyreste weiter substituiert sein können. Gleiches gilt für den nichtaromatischen Teil eines Arylalkyl-Restes.

C₁-C₄-Alkyl steht beispielsweise für Methyl, Ethyl, n-Propyl, iso-Propyl, n-Butyl, sec.-Butyl und tert.-Butyl, C₁-C₈-Alkyl darüber hinaus beispielsweise für n-Pentyl, 1-Methylbutyl, 2-Methylbutyl, 3-Methylbutyl, neo-Pentyl, 1-Ethylpropyl, cyclo-Hexyl, cyclo-Pentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, n-Heptyl und n-Octyl, C₁-C₁₂-Alkyl weiter darüber hinaus beispielsweise für Adamantyl, die isomeren Menthyle, n-Nonyl, n-Decyl und n-Dodecyl.

C₁-C₄-Alkoxy steht beispielsweise für Methoxy, Ethoxy, n-Propoxy, iso-Propoxy, n-Butoxy, sec.-Butoxy und tert.-Butoxy, C₁-C₈-Alkoxy darüber hinaus für n-Pentoxy, 1-Methylbutoxy, 2-Methylbutoxy, 3-Methylbutoxy, neo-Pentoxy, 1-Ethylpropoxy, cyclo-Hexoxy, cyclo-Pentoxy, n-Hexoxy, n-Octoxy und C₁-C₁₂-Alkoxy noch weiter darüber hinaus für Adamantoxy, die isomeren Menthoxy-Reste, n-Decoxy und n-Dodecoxy.

C₂-C₁₂-Alkenyl steht beispielsweise für Vinyl, 1-Propenyl, iso-Propenyl, 1-Butenyl, 2-Butenyl, 1-Pentenyl, 2-Pentenyl, 2-Methyl-1-butenyl, 2-Methyl-2-butenyl, 3-Methyl-1-butenyl, 1-Hexenyl, 1-Heptenyl, 1-Octenyl oder 2-Octenyl.

**Halogenalkyl** bedeutet jeweils unabhängig einen geradkettigen, cyclischen, verzweigten oder unverzweigten Alkyl-Rest, der einfach, mehrfach oder vollständig durch Chlor oder Fluoratome substituiert ist.

Beispielsweise steht C₁-C₁₂-Fluorakyl für Trifluormethyl, 2,2,2-Trifluorethyl, 2,2,2-Trichlorethyl und Pentafluorethyl.

**Aryl** steht jeweils unabhängig einen heteroaromatischen Rest mit 4 bis 14 Gerüstkohlenstoffatomen, in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, vorzugsweise jedoch für einen carbocyclischen aromatischen Rest mit 6 bis 14 Gerüstkohlenstoffatomen.

Beispiele für carbocyclische aromatische Reste mit 6 bis 14 Gerüstkohlenstoffatomen sind Phenyl, Naphtyl oder Fluorenyl, heteroaromatische Reste mit 4 bis 14 Gerüstkohlenstoffatomen in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, beispielsweise Furan-yl, Pyridinyl, Oxazolyl, Benzofuranyl, Dibenzofuran-yl oder Chinolinyl.

Weiterhin kann der carbocyclische aromatische Rest oder heteroaromatische Rest mit bis zu fünf gleichen oder verschiedenen Substituenten pro Cyclus substituiert sein, die ausgewählt sind aus der Gruppe Chlor, Fluor, Brom, Cyano, C₁-C₁₂-Alkyl, C₁-C₁₂-Halogenalkyl, C₁-C₁₂-Alkoxy, Di(C₁-C₈-alkyl)amino, COO(C₁-C₈-Alkyl), CON(C₁-C₈-Alkyl)₂, COO(C₅-C₁₅-Arylalkyl), COO(C₄-C₁₄-Aryl), CO(C₁-C₈-Alkyl), C₅-C₁₅-Arylalkyl oder Tri(C₁-C₈-alkyl)siloxyl.

**Arylalkyl** bedeutet jeweils unabhängig einen geradkettigen, cyclischen, verzweigten oder unverzweigten Alkyl-Rest, der einfach, mehrfach oder vollständig durch ArylReste gemäß obiger Definition substituiert sein kann.

C₅-C₁₅-Arylalkyl steht beispielsweise für Benzyl, (R)- und (S)-1-Phenylethyl, 1-Phenylpropyl, 2-Phenylpropyl, 1-Phenyl-1-methylethyl, 1-, 2-, 3- oder 4-Phenylbutyl, 1-Naphthylmethyl, 1-Naphthylethyl und Naphthyl-1-methylethyl.

**Geschütztes Formyl** steht im Rahmen der Erfindung für einen Formyl-Rest, der durch Überführung in ein Aminal, Acetal oder ein gemischtes Aminalacetal geschützt ist, wobei die Aminale, Acetale und gemischten Aminalacetale acyclisch oder cyclisch sein können.

**Geschütztes Hydroxy** steht im Rahmen der Erfindung für einen Hydroxy-Rest, der durch Überführung in ein Acetal, Carbonat, Carbamat oder Carboxylat geschützt ist.

Beispiele dafür sind die Überführung in ein Tetrahydropyranyladdukt, in ein Benzyloxycarbonyl-, Allyloxycarbonyl- oder ein tert.-Butyloxycarbonyl-Derivat.

Im Folgenden werden die bevorzugten Substitutionsmuster für die Verbindungen der Formeln (I) und (III) und (V) definiert:
- R¹: steht bevorzugt für einen Rest der ausgewählt ist aus der Gruppe C₁-C₈-Alkyl, C₅-C₁₅-Arylalkyl und C₄-C₁₄-Aryl, wobei die Auflage gilt, dass
R¹ eine Molmasse von 200 oder weniger aufweist.
- R¹: steht besonders bevorzugt für einen Rest der ausgewählt ist aus der Gruppe C₁-C₈-Alkyl, Benzyl und Phenyl, wobei Benzyl und Phenyl gegebenenfalls einfach, zweifach oder dreifach durch Reste substituiert sein können die jeweils unabhängig voneinander ausgewählt sind aus der Gruppe Chlor, Fluor, Methyl, Ethyl, iso-Propyl, tert.-Butyl, Methoxy, Ethoxy, iso-Propoxy, Dimethylamino, Diethylamino, Acetyl, Trifluormethyl und Cyano, wobei die Auflage gilt, dass
R¹ eine Molmasse von 200 oder weniger aufweist.
- R¹: steht ganz besonders bevorzugt für iso-Propyl, neo-Pentyl, Benzyl und Phenyl.

Vorzugsweise werden für das erfindungsgemäße Verfahren stereoisomerenangereicherte wie insbesondere enantiomerenangereicherte Verbindungen der Formel (V) eingesetzt. Enantiomerenangereichert im Sinne der Erfindung umfasst enantiomerenreine Verbindungen oder beliebige Mischungen von Enantiomeren, in denen ein Enantiomer in einem Enantiomerenüberschuss, im Folgenden auch ee (enantiomeric excess) genannt, im Vergleich zum anderen Enantiomer vorliegt. Bevorzugt beträgt dieser Enantiomerenüberschuss bei Verbindungen der Formel (V) 10 bis 100 %ee, besonders bevorzugt 90 % bis 100 %ee und ganz besonders bevorzugt 98 bis 100 %ee.

In den Formeln (I) und (V) steht
- D: bevorzugt für einen unsubstituierten oder substituierten 1,1'-Biphenyl-2,2'-diyl-Rest der Formel (VI), 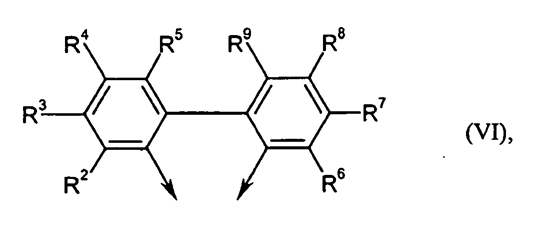 oder für einen unsubstituierten oder substituierten 1,1'-Binaphthyl-2,2'-diyl-Rest der Formel (VII), 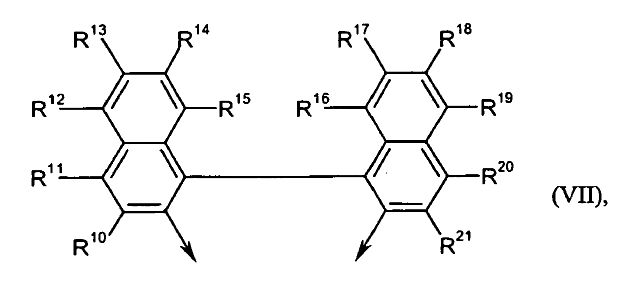 in denen die Reste R² bis R²⁰ jeweils unabhängig voneinander ausgewählt sind aus der Gruppe Wasserstoff, Fluor, Chlor, Brom, Cyano, geschütztes Hydroxy, C₁-C₁₂-Alkyl, C₁-C₁₂-Halogenalkyl, C₁-C₁₂-Alkoxy, C₁-C₈-Alkylthio, freies oder geschütztes Formyl, C₄-C₁₄-Aryl, Tri(C₁-C₈-alkyl)siloxyl oder Resten der Formel (VIII),

A-B-E-F (VIII),

in der unabhängig voneinander
- A: fehlt oder für einen C₁-C₈-Alkylenrest steht und
- B: fehlt oder für Sauerstoff, Schwefel oder NR²¹ steht,
wobei
R²¹ für Wasserstoff, C₁-C₁₂-Alkyl oder C₄-C₁₄-Aryl steht und
E für eine Carbonyl-Gruppe steht und
F für R²², OR²², NHR²³ oder NR²³R²⁴ steht,
wobei
R²² für C₁-C₁₂-Alkyl oder C₆-C₁₀-Aryl und
R²³ und R²⁴ jeweils unabhängig voneinander für C₁-C₈-Alkyl oder C₄-C₁₄-Aryl stehen oder NR²³R²⁴ zusammen für einen cyclischen Aminorest mit 4 bis 12 Kohlenstoffatomen steht.

Jeweils zwei benachbarte Reste aus R² bis R²⁰ können zusammen auch einen nicht aromatischen Ring bilden. Weiterhin können jeweils zwei der Reste aus R² bis R²⁰ verbrückend sein. Hier kommen bevorzugt und beispielsweise Verbrückungen der Formel (IX) in Betracht

-O-G¹-K-G²-O- (IX)

in denen unabhängig voneinander
- G¹ und: G² entweder entfallen können, eine Carbonylgruppe oder eine Carbonyl-aminogruppe sein können und
- K: unsubstituiertes oder substituiertes C₂-C₆-Alkylen sein kann.
- D: steht besonders bevorzugt für einen unsubstituierten oder substituierten 1,1'-Biphenyl-2,2'-diyl-Rest der Formel (VI) oder einen unsubstituierten oder substituierten 1,1'-Biphenyl-2,2'-diyl-Rest der Formel (VII), in denen die Reste R² bis R²⁰ jeweils unabhängig voneinander ausgewählt sind aus der Gruppe Wasserstoff, Fluor, Chlor, C₁-C₈-Alkyl, C₁-C₈-Halogenalkyl oder C₁-C₈-Alkoxy.

Das erfindungsgemäße Verfahren eignet sich insbesondere zur Herstellung von folgenden Verbindungen:
((S)-5,5 '-Dichlor-6,6'-dimethoxy-1,1'-biphenyl-2,2'-diyl)-isopropyl-phosphit
((R)-5,5'-Dichlor-6,6'-dimethoxy-1,1'-biphenyl-2,2'-diyl)-isopropyl-phosphit
((R)-5,5'-Dichlor-6,6'-dimethoxy-1,1'-biphenyl-2,2'-diyl)-(R)-1-phenylethyl-phosphit
((R)-5,5'-Dichlor-6,6'-dimethoxy-1,1'-biphenyl-2,2'-diyl)-(S)-1-phenylethyl-phosphit
((S)-5,5'-Dichlor-6,6'-dimethoxy-1,1'-biphenyl-2,2'-diyl)-(R)-1-phenylethyl-phosphit
((S)-5,5'-Dichlor-6,6'-dimethoxy-1,1'-biphenyl-2,2'-diyl)-(S)-1-phenylethyl-phosphit
((S)-5,5'-Dichlor-6,6'-dimethoxy-1,1'-biphenyl-2,2'-diyl)-cyclohexyl-phosphit
((R)-5,5'-Dichlor-6,6'-dimethoxy-1,1'-biphenyl-2,2'-diyl)-cyclohexyl-phosphit
((S)-5,5'-Dichlor-6,6'-dimethoxy-1,1'-biphenyl-2,2'-diyl)-phenyl-phosphit
((R)-5,5'-Dichlor-6,6'-dimethoxy-1,1'-biphenyl-2,2'-diyl)-phenyl-phosphit
((S)-5,5'-Dichlor-6,6'-dimethoxy-1,1'-biphenyl-2,2'-diyl)-2,6-dimethylphenyl-phosphit
((R)-5,5'-Dichlor-6,6'-dimethoxy-1,1'-biphenyl-2,2'-diyl)-2,6-dimethylphenyl-phosphit
((S)-5,5',6,6'-tetramethyl-3,3'-bis(tert.-butyl)-1,1'-biphenyl-2,2'-diyl)-isopropyl-phosphit
((R)-5,5',6,6'-tetramethyl-3,3'-bis(tert.-butyl)-1,1'-biphenyl-2,2'-diyl)-isopropyl-phosphit
((S)-S,5',6,6'-tetramethyl-3,3'-bis(tert.-butyl)-1,1'-biphenyl-2,2'-diyl)-(rac)-1-phenylethyl-phosphit
((R)-5,5',6,6'-tetramethyl-3,3'-bis(tert.-butyl)-1,1'-biphenyl-2,2'-diyl)-(rac)-1-phenylethyl-phosphit
((S)-S,5',6,6'-tetramethyl-3,3'-bis(tert.-butyl)-1,1'-biphenyl-2,2'-diyl)-(S)-1-phenylethyl-phosphit
((R)-5,5',6,6'-tetramethyl-3,3'-bis(tert.-butyl)-1,1'-biphenyl-2,2'-diyl)-(S)-1-phenylethyl-phosphit
((S)-5,5',6,6'-tetramethyl-3,3'-bis(tert.-butyl)-1,1'-biphenyl-2,2'-diyl)-(R)-1-phenylethyl-phosphit
((R)-5,5',6,6'-tetramethyl-3,3'-bis(tert.-butyl)-1,1'-biphenyl-2,2'-diyl)-(R)-1-phenylethyl-phosphit
((S)-5,5',6,6'-tetramethyl-3,3'-bis(tert.-butyl)-1,1'-biphenyl-2,2'-diyl)-diphenylmethyl-phosphit
((R)-5,5',6,6'-tetramethyl-3,3'-bis(tert.-butyl)-1,1'-biphenyl-2,2'-diyl)-diphenylmethyl-phosphit
((S)-5,5',6,6'-tetramethyl-3,3'-bis(tert.-butyl)-1,1'-biphenyl-2,2'-diyl)-methyl-phosphit
((R)-5,5',6,6'-tetramethyl-3,3'-bis(tert.-butyl)-1,1'-biphenyl-2,2'-diyl)-methyl-phosphit
((S)-5,5',6,6'-tetramethyl-3,3'-bis(tert.-butyl)-1,1'-biphenyl-2,2'-diyl)-2,6-dimethylphenyl-phosphit
((R)-5,5',6,6'-tetramethyl-3,3'-bis(tert.-butyl)-1,1'-biphenyl-2,2'-diyl)-2,6-dimethylphenyl-phosphit
((S)-5,5',6,6'-tetramethyl-3,3'-bis(tert.-butyl)-1,1'-biphenyl-2,2'-diyl)-2,6-diisopropylphenyl-phosphit
((R)-5,5',6,6'-tetramethyl-3,3'-bis(tert.-butyl)-1,1'-biphenyl-2,2'-diyl)-2,6-diisopropylphenyl-phosphit
((S)-5,5',6,6'-tetramethyl-3,3'-bis(tert.-butyl)-1,1'-biphenyl-2,2'-diyl)-phenyl-phosphit
((R)-5,5',6,6'-tetramethyl-3,3'-bis(tert.-butyl)-1,1'-biphenyl-2,2'-diyl)-phenyl-phosphit
((S)-5,5',6,6'-tetramethyl-3,3'-bis(tert.-butyl)-1,1'-biphenyl-2,2'-diyl)-ethyl-phosphit
((R)-5,5',6,6'-tetramethyl-3,3'-bis(tert.-butyl)-1,1'-biphenyl-2,2'-diyl)-ethyl-phosphit
((S)-5,5',6,6'-tetramethyl-3,3'-bis(tert.-butyl)-1,1'-biphenyl-2,2'-diyl)-4-tert-butylphenyl-phosphit
((R)-5,5',6,6'-tetramethyl-3,3'-bis(tert.-butyl)-1,1'-biphenyl-2,2'-diyl)-4-tert-butylphenyl-phosphit
((S)-1,1'-Binaphthyl-2,2'-diyl)-isopropyl-phosphit
((R)-1,1'-Binaphthyl-2,2'-diyl)-isopropyl-phosphit
((S)-1,1'-Binaphthyl-2,2'-diyl)-neopentyl-phosphit
((R)-1,1'-Binaphthyl-2,2'-diyl)-neopentyl-phosphit
((S)-1,1'-Binaphthyl-2,2'-diyl)-phenyl-phosphit
((R)-1,1'-Binaphthyl-2,2'-diyl)-phenyl-phosphit
((S)-1,1'-Binaphthyl-2,2'-diyl)-benzyl-phosphit und
((R)-1,1'-Binaphthyl-2,2'-diyl)-benzyl-phosphit,
wobei letzten acht genannten Verbindungen noch weiter bevorzugt sind.

Die Schritte a) und c) werden gegebenenfalls in Gegenwart einer Base durchgeführt.

Schritt a) wird bevorzugt ohne Base, Schritt c) bevorzugt in Gegenwart einer Base durchgeführt.

Als Base können für die Umsetzung gemäß den Schritten a) und c) jeweils unabhängig voneinander Erdalkali- oder Alkalimetallhydride, -hydroxide, -amide, -alkoholate, -carbonate oder -hydrogencarbonate, wie beispielsweise Natriumhydrid, Natriumamid, Lithium-diethylamid, Natriummethylat, Natriumethylat, Kalium-tert.-butylat, Natriumhydroxid, Kaliumhydroxid, Natriumcarbonat, Kaliumcarbonat, Kaliumhydrogencarbonat oder Natriumhydrogencarbonat, Lithium-organische Verbindungen, wie n-Butyllithium, aromatische Stickstoffbasen wie Pyridine wie beispielsweise Pyridin, 2,6-Lutidin, 2-, 3-, 4-Picolin, sowie vorzugsweise tertiäre Amine, wie beispielsweise Trimethylamin, Triethylamin, Tributylamin, Di-iso-propyl-ethylamin, Tetramethylguanidin, N,N-Dimethylanilin, Piperidin, N-Methylpiperidin, N,N-Dimethylaminopyridin, Diazabicyclooctan (DABCO), Diazabicyclononen (DBN) oder Diazabicycloundecen (DBU) eingesetzt werden.

Besonders bevorzugt wird als Base Triethylamin eingesetzt.

Werden für die Schritte a) und c) aromatische Stickstoffbasen oder tertiäre Amine eingesetzt, erfolgt vorzugsweise vor weiterer Umsetzung bzw. Aufarbeitung die Abtrennung von gegebenenfalls ausgefallenen Hydrohalogeniden der eingesetzten Basen. Die Abtrennung erfolgt vorzugsweise durch Filtration.

Die Schritte a) und c) werden gegebenenfalls in Gegenwart eines Lösungsmittels durchgeführt. Schritt a) wird bevorzugt ohne Lösungsmittel, Schritt c) bevorzugt in Gegenwart eines Lösungsmittels durchgeführt.

Als Lösungsmittel eignen sich insbesondere organische Lösungsmittel wie aliphatische oder aromatische, gegebenenfalls halogenierte Kohlenwasserstoffe, wie beispielsweise Petrolether, Benzol, Toluol, die isomeren Xylole, Chlorbenzol, die isomeren Dichlorbenzole, Hexan, Cyclohexan, Dichlormethan oder Chloroform sowie Ether, wie Diethylether, Diisopropylether, Dioxan, Tetrahydrofuran, Methyl-tert.-butylether oder Ethylenglykoldimethyl- oder -diethylether. Bevorzugte organische Lösungsmittel sind Toluol, Diethylether, Tetrahydrofuran und Methyl-tert.-butylether.

Im Schritt a) kann bei Einsatz von Base das molare Verhältnis von Base zu Verbindungen der Formel (II) beispielsweise und bevorzugt 0,7:1 bis 2,0:1, besonders bevorzugt 0,9:1 bis 1,2:1 und ganz besonders bevorzugt 1,0:1 bis 1,1:1 1 betragen.

Im Schritt c) beträgt das molare Verhältnis von Base zu Verbindungen der Formel (IV) beispielsweise und bevorzugt 1,4:1 bis 4,0:1, besonders bevorzugt 1,8:1 bis 2,5:1 und ganz besonders bevorzugt 2,0:1 bis 2,2:1.

Im Schritt a) beträgt die Reaktionstemperatur beispielsweise und bevorzugt -20 bis 100°C, besonders bevorzugt -15 bis 40°C und ganz besonders bevorzugt -10 bis 25°C.

Gleiche Temperaturbereiche gelten für Schritt c).

Im Schritt a) kann das molare Verhältnis von Verbindungen der Formel (II) zu Verbindungen der Formel (III) beispielsweise 1,2:1 bis 10:1, bevorzugt 1,5:1 bis 4:1 und besonders bevorzugt 1,5:1 bis 2,5:1 betragen. Größere Mengen an Verbindungen der Formel (III) sind möglich aber unwirtschaftlich.

Im Schritt c) kann das molare Verhältnis von Verbindungen der Formel (IV) zu Verbindungen der Formel (V) beispielsweise 0,5:1 bis 5:1, bevorzugt 0,8:1 bis 1,5:1 und besonders bevorzugt 0,8:1 bis 1,0:1 betragen.

Gemäß Schritt b) findet eine Destillation und dabei eine Reinigung statt.

Die Destillation kann beispielsweise und bevorzugt bei einem Druck von 0,001 bis 1000 hPa, bevorzugt 0,001 bis 100 hPa und besonders bevorzugt 0,001 bis 50 hPa durchgeführt werden.

Sowohl die nach Aufarbeitung erhaltenen Verbindungen der Formel (I) als auch die gegebenenfalls nach Filtration erhaltenen Reaktionslösungen von Verbindungen der Formel (I) können direkt für die Synthese von Übergangsmetallkomplexen enthaltend Verbindungen der Formel (I) eingesetzt werden.

Die Aufarbeitung kann beispielsweise und bevorzugt derart erfolgen, dass gegebenenfalls nach Abtrennung von gegebenenfalls Ausgefallenem zunächst das Lösungsmittel destillativ entfernt wird und die Verbindungen der Formel (I) durch Umkristallisation oder Umfällung weiter gereinigt werden.

Ein wesentlicher Vorteil der erfindungsgemäß erhältlichen Verbindungen der Formel (I) dabei ist, dass sie in sehr hoher Reinheit anfallen und insbesondere praktisch frei von störenden Nebenprodukten wie insbesondere Phosphaten sind. Häufig fallen Phosphite dennoch in hochviskoser, zur Schaumbildung neigender Form an, was die Handhabbarkeit erschwert.

Daher ist von der Erfindung weiterhin ein Verfahren zur Herstellung von Übergangsmetallkomplexen enthaltend Verbindungen der Formel (I) umfasst, das sowohl die erfindungsgemäßen Schritte a), b) und c) als auch als Schritt d) die Umsetzung der gemäß den Schritten a) bis c) erhaltenen Verbindungen der Formel (I) mit Übergangsmetallverbindungen beinhaltet.

Als Lösungsmittel für die Umsetzung von Verbindungen der Formel (I) mit Übergangsmetallverbindungen eignen sich insbesondere die gleichen organischen Lösungsmittel, die für die Umsetzung gemäß Schritt c) geeignet sind. Bevorzugt ist Methylenchlorid.

In einer bevorzugten Ausführungsform können die Verbindungen der Formel (I) in Form ihrer Lösungen, wie sie gemäß Schritt c) erhalten werden, gegebenenfalls nach Abtrennung von Ausgefallenem, direkt in Schritt d) eingesetzt werden.

Alternativ dazu können die Lösungen wie sie gemäß Schritt c) erhalten werden, gegebenenfalls nach Abtrennung von Ausgefallenem, eingeengt, erneut in Lösungsmittel aufgenommen und anschließend in Schritt d) eingesetzt werden.

Übergangsmetallkomplexe enthaltend Verbindungen der Formel (I) sind vorzugsweise Übergangsmetallkomplexe von Ruthenium, Rhodium, Iridium, Nickel, Palladium und Platin, bevorzugt solche von Ruthenium, Rhodium und Iridium.

Besonders bevorzugte Übergangsmetallkomplexe enthaltend Verbindungen der Formel (I) sind solche der Formel (Xa)

[(I)₄M¹]An¹ (Xa),

in der
- (I): jeweils unabhängig bevorzugt identisch für eine Verbindung der Formel (I) steht und
- M¹: für Rhodium oder Iridium steht und
- An¹: für Methansulfonat, Trifluormethansulfonat, Tetrafluoroborat, Hexafluoro-phosphat, Perchlorat, Hexafluoroantimonat, Tetra(bis-3,5-trifluormethylphenyl)borat oder Tetraphenylborat steht oder
solche der Formel (Xb)

[(I)₂L₂M¹]An¹ (Xb),

in der
- (I): jeweils unabhängig bevorzugt identisch für eine Verbindung der Formel (I) steht und
- M¹: für Rhodium oder Iridium steht und
- An¹: für Methansulfonat, Trifluormethansulfonat, Tetrafluoroborat, Hexafluorophosphat, Perchlorat, Hexafluoroantimonat, Tetra(bis-3,5-trifluormethylphenyl)borat oder Tetraphenylborat steht und
- L: jeweils für ein C₂-C₁₂-Alken wie beispielsweise Ethylen oder Cycloocten, oder ein Nitril wie beispielsweise Acetonitril, Benzonitril oder Benzylnitril steht, oder
- L₂: zusammen für ein (C₄-C₁₂)-Dien wie beispielsweise Norbornadien oder 1,5-Cyclooctadien steht und
solche der Formel (XI)

[(I)₄Hal₂M¹₂] (XI),

in der
- (I): jeweils unabhängig bevorzugt identisch für eine Verbindung der Formel (I) steht und
- M¹: für Rhodium oder Iridium steht und
- Hal: für Chlor, Brom oder Iod, bevorzugt für Chlor steht oder
solche der Formel (XII)

[(I)₂(Aren)Hal₂Ru] (XII),

in der
- (I): jeweils unabhängig bevorzugt identisch für eine Verbindung der Formel (I) steht und
- Aren: für eine koordinierte aromatische Verbindung mit 6 bis 12 Ringkohlenstoff-atomen steht, die weiterhin mit bis zu 6 Resten substituiert sein kann, die jeweils unabhängig voneinander ausgewählt sind aus der Gruppe C₁-C₈-Alkyl, Benzyl und Phenyl, wobei Aren bevorzugt für Benzol oder Naphthalin, das mit bis zu 6 Resten substituiert sein kann, die jeweils unabhängig voneinander ausgewählt sind aus der Gruppe Methyl, Ethyl, n-Propyl, Iso-propyl und tert.-Butyl und besonders bevorzugt für Mesitylen, Cumol oder Benzol steht und
- Hal: für Chlor, Brom oder Iod, bevorzugt für Chlor steht oder
solche der Formel (XIII)

[(I)₂(XIV)Hal₂Ru] (XIII),

in der
- (I): jeweils unabhängig bevorzugt identisch für eine Verbindung der Formel (I) steht und
- Hal: für Chlor, Brom, Iod, bevorzugt für Chlor steht,
- (XIV): für Verbindungen der Formel (XIV) steht 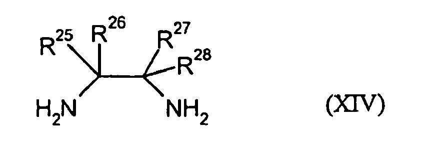
in der
- R²⁵,: R²⁶, R²⁷ und R²⁸ jeweils unabhängig voneinander für Wasserstoff, C₁-C₁₂-Alkyl, C₄-C₁₄-Aryt oder C₅-C₁₅-Arylalkyl oder jeweils zwei Reste zusammen für einen geradkettigen oder verzweigten C₃-C₁₂-Alkylen-Rest stehen.

Bevorzugte Verbindungen der Formel (XIV) sind:
(S)- und (R)-1,2-Diphenylethylen-1,2-diamin, (S)- und (R)-1,2-Di-tert.-butyl-ethylen-1,2-diamin, (S)- und (R)-1,1-Di-(p-methoxyphenyl)-2-iso-propyl-ethylen-1,2-diamin, (S)- und (R,R)-16-Aminotetracyclo[6.6.2.02,7.09,14]hexadeca-2,4,6,9,11,13-hexaen-15-ylamin und (S)- und (R)-1,2-Diaminocyclohexan.

Bevorzugt weisen die Verbindungen der Formel (XIV) eine Stereoisomerenreinheit von 90% oder mehr, besonders bevorzugt von 95% oder mehr und ganz besonders bevorzugt von 98,5% oder mehr auf.

Die Verbindungen der Formeln (Xa), (Xb), (XI), (XII) und (XIII) sind von der Erfindung ebenfalls umfasst.

Übergangsmetallkomplexe enthaltend Verbindungen der Formel (I) werden durch Umsetzung von Verbindungen der Formel (I) mit Übergangsmetallverbindungen erhalten.

Geeignete Übergangsmetallverbindungen sind bevorzugt solche der Formel (XV)

M²(An²)ₚ (XV)

in der
- M²: für Ruthenium, Rhodium, Iridium, Nickel, Palladium oder Platin und
- An²: für Chlorid, Bromid, Acetat, Nitrat, Methansulfonat, Trifluormethansulfonat oder Acetylacetonat und
- p: für Ruthenium, Rhodium und Iridium für 3, für Nickel, Palladium und Platin für 2 steht,
oder Übergangsmetallverbindungen der Formel (XVI)

M²(An²)ₚL¹₂ (XVI)

in der
- M²: für Ruthenium, Rhodium, Iridium, Nickel, Palladium oder Platin und
- An²: für Chlorid, Bromid, Acetat, Methansulfonat, Trifluormethansulfonat, Tetrafluoroborat, Hexafluorophosphat, Perchlorat, Hexafluoroantimonat, Tetra(bis-3,5-trifluormethylphenyl)borat oder Tetraphenylborat steht und
- p: für Rhodium und Iridium für 1, für Nickel, Palladium, Platin und Ruthenium für 2 steht und
- L¹: jeweils für ein C₂-C₁₂-Alken wie beispielsweise Ethylen oder Cycloocten, oder ein Nitril wie beispielsweise Acetonitril, Benzonitril oder Benzylnitril steht, oder
- L¹₂: zusammen für ein (C₄-C₁₂)-Dien wie beispielsweise Norbornadien oder 1,5-Cyclooctadien steht
oder Übergangsmetallverbindungen der Formel (XVII)

[M²L²An²₂]₂ (XVII)

in der
- M²: für Ruthenium und
- L²: für Arylreste wie zum Beispiel Cymol, Mesityl, Phenyl oder Cyclooctadien, Norbornadien oder Methylallyl und
- An²: für Chlorid, Bromid, Acetat, Methansulfonat, Trifluormethansulfonat, Tetrafluoroborat, Hexafluorophosphat, Perchlorat, Hexafluoroantimonat, Tetra(bis-3,5-trifluormethylphenyl)borat oder Tetraphenylborat steht
oder Übergangsmetallverbindungen der Formel (XVIII)

M³ₚ[M²(An³)₄] (XVIII),

wobei
- M²: für Palladium, Nickel, Iridium oder Rhodium und
- An³: für Chlorid oder Bromid steht und
- M³: für Lithium, Natrium, Kalium, Ammonium oder organisches Ammonium steht und
- p: für Rhodium und Iridium für 3, für Nickel, Palladium und Platin für 2 steht,
oder Übergangsmetallverbindungen der Formel (XIX)

[M²(L³)₂]An⁴ (XIX),

wobei
- M²: für Iridium oder Rhodium und
- L³: für ein (C₄-C₁₂)-Dien wie beispielsweise Norbornadien oder 1,5-Cyclooctadien steht,
- An⁴: für ein nicht oder schwach koordinierendes Anion wie zum Beispiel Methansulfonat, Trifluormethansulfonat, Tetrafluoroborat, Hexafluorophosphat, Perchlorat, Hexafluoroantimonat, Tetra(bis-3,5-trifluormethylphenyl)borat oder Tetraphenylborat steht.

Darüber hinaus sind als Übergangsmetallverbindungen beispielsweise Ni(1,5-Cyclooctadien)₂, Pd₂(dibenzylidenaceton)₃, Pd[PPh₃]₄ Cyclopentadienyl₂Ru, Rh(acac)(CO)₂, Ir(pyridin)₂(1,5-Cyclooctadien), Cu(Phenyl)Br, Cu(Phenyl)Cl, Cu(Phenyl)I, Cu(PPh₃)₂Br, [Cu(CH₃CN)₄]BF₄ und [Cu(CH₃CN)₄]PF₆ oder mehrkernige verbrückte Komplexe wie beispielsweise [Rh(1,5-cyclooctadien)Cl]₂ und [Rh(1,5-cyclooctadien)Br]₂, [Rh(Ethen)₂Cl]₂, [Rh(Cycloocten)₂Cl]₂ geeignet.

Bevorzugte Übergangsmetallverbindungen sind solche, die sich zur Herstellung von Verbindungen der Formeln (X) bis (XIII) eignen.

Dies sind insbesondere:
[Rh(COD)Cl]₂ (COD = 1,5-Cyclooctadien), [Rh(COD)₂Br], [Rh(COD)₂]ClO₄,
[Rh(COD)₂]BF₄, [Rh(COD)₂]PF₆, [Rh(COD)₂]OTf, [Rh(COD)₂]BAr₄ (Ar = 3,5-bistrifluormethylphenyl) [Rh(COD)₂]SbF₆ RuCl₂(COD), [(Cymol)RuCl₂]₂,
[(Benzol)RuCl₂]₂, [(Mesityl)RuCl₂]₂, [(Cymol)RuBr₂]₂, [(Cymol)RuI₂]₂,
[(Cymol)Ru(BF₄)₂]₂, [(Cymol)Ru(PF₆)₂]₂, [(Cymol)Ru(BAr₄)₂]₂, (Ar = 3,5-bistrifluormethylphenyl), [(Cymol)Ru(SbF₆)₂]₂, [Ir(COD)₂Cl]₂, [Ir(COD)₂]PF₆,
[Ir(COD)₂]ClO₄, [Ir(COD)₂]SbF₆ [Ir(COD)₂]BF₄, [Ir(COD)₂]OTf, [Ir(COD)₂]BAr₄ (Ar = 3,5-bistrifluormethylphenyl),
[Rh(nbd)Cl]₂ (nbd = Norbomadien), [Rh(nbd)₂Br], [Rh(nbd)₂]ClO₄, [Rh(nbd)₂]BF₄,
[Rh(nbd)₂]PF₆, [Rh(nbd)₂]OTf, [Rh(nbd)₂]BAr₄ (Ar = 3,5-bistrifluormethylphenyl) [Rh(nbd)₂]SbF₆ RuCl₂(nbd), [Ir(nbd)₂]PF₆, [Ir(nbd)₂]ClO₄, [Ir(nbd)₂]SbF₆ [Ir(nbd)₂]BF₄, [Ir(nbd)₂]OTf, [Ir(nbd)₂]BAr₄ (Ar = 3,5-bistrifluormethylphenyl), Ir(pyndin)₂(nbd), [Ru(DMSO)₄Cl₂], [Ru(CH₃CN)₄Cl₂], [Ru(PhCN)₄Cl₂] und [Ru(COD)Cl₂]ₙ, wobei
[(Cymol)RuCl₂]₂, Rh(COD)₂OTf, Rh(COD)₂PF₆, Rh(COD)₂SbF₆ und Rh(COD)₂BF₄ noch weiter bevorzugt sind.

Die Menge des Übergangsmetalls in der eingesetzten Übergangsmetallverbindung kann bei der Umsetzung zu Übergangsmetallkomplexen enthaltend die Verbindungen der Formel (I) beispielsweise 10 bis 100 mol% bezogen auf die eingesetzte Verbindung der Formel (I) betragen, bevorzugt sind Mengen, die um 0 bis 10 mol-% höher liegen als die gewünschte Stöchiometrie bzw. der Stöchiometrie in den Übergangsmetallkomplexen der Formel (X) bis (XIII).

Die gemäß Schritt d) erhaltenen Übergangsmetallkomplexe enthaltend die Verbindungen der Formel (I) können entweder in an sich bekannter Weise isoliert werden oder direkt in Form der in Schritt d) erhaltenen Reaktionslösung als Katalysatoren eingesetzt werden.

Von der Erfindung ist weiterhin Verfahren zur Herstellung von stereoisomerenangereicherten Verbindungen durch asymmetrische Synthese umfasst, das dadurch gekennzeichnet ist, dass als Katalysatoren Übergangsmetallkomplexe enthaltend die Verbindungen der Formel (I) oder Übergangsmetallkomplexe der Formeln (Xa), (XI), (XII) und (XIII) verwendet werden.

Die Übergangsmetallkomplexe enthaltend die Verbindungen der Formel (I) sowie Verbindungen der Formeln (Xa), (Xb), (XI), (XII) und (XIII) eignen sich insbesondere als Katalysatoren, vorzugsweise in einem Verfahren zur Herstellung von stereoisomerenangereicherten, besonders bevorzugt enantiomerenangereicherten Verbindungen.

Von der Erfindung ist daher ein Verfahren zur Herstellung von stereoisomerenangereicherten Verbindungen durch asymmetrische Synthese umfasst, das dadurch gekennzeichnet ist, dass als Katalysatoren Übergangsmetallkomplexe enthaltend die Verbindungen der Formel (I) oder Übergangsmetallkomplexe der Formeln (Xa), (XI), (XII) und (XIII) verwendet werden.

Bevorzugte Verfahren zur Herstellung von chiralen Verbindungen sind asymmetrische 1,4-Additionen, asymmetrische Hydroformylierungen, asymmetrische Hydrocyanierungen, asymmetrische Heck Reaktionen und asymmetrische Hydrogenierungen, besonders bevorzugt sind asymmetrische Hydrogenierungen.

Bevorzugte asymmetrische Hydrogenierungen sind beispielsweise Hydrogenierungen von prochiralen C=C-Bindungen wie zum Beispiel prochirale Enamine, Olefine, Enolether, C=O-Bindungen wie zum Beispiel prochirale Ketone und C=N-Bindungen wie zum Beispiel prochirale Imine. Besonders bevorzugte asymmetrische Hydrogenierungen sind Hydrogenierungen von prochiralen Enaminen und Olefinen.

Der Vorteil der vorliegenden Erfindung ist, dass auf effiziente Weise Phosphite in hohen Ausbeuten praktisch ohne störende Phosphate hergestellt werden können. Weiterhin erlaubt die hohe Produktreinheit den direkten Einsatz zur Herstellung von Übergangsmetallkomplexen, die als Katalysatoren verwendet werden können.

### Beispiele

### Beispiel 1

### Herstellung von Isopropyl-dichlorido-phosphit

In einem ausgeheizten Dreihals-Kolben mit aufgesetztem Tropftrichter und Destillationsaufsatz und Vigreux-kolonne wird Phosphortrichlorid (30 ml, 0,34 mol) bei -10°C vorgelegt und unter stetigem Rühren durch den Tropftrichter langsam 2-Propanol (17,5 ml, 0,23 mol) zugegeben. Nach beendeter Zugabe wird 1 h weiter gerührt. Anschließend wird Isopropyl-dichlorido-phosphit bei 25 mbar (Sdp₋₂₅: 31°C) erhalten. Man erhält auf diese Weise 14,0 g (52 % d.Th.).

### Beispiel 2

### Herstellung von ((R)-1,1'-Binaphthyl-2,2'-diyl)-iso-propyl-phosphit

In einen ausgeheizten 100 ml Schlenk-Kolben legt man 75ml getrocknetes, entgastes Tetrahydrofuran und 2,41g (15,0mmol) Isopropyldichloridophosphit unter Argonatmosphäre bei Raumtemperatur vor und kühlt auf 0°C ab. Man versetzt mit 4,19ml (30,1mmol) abs. Triethylamin und rührt für 5 min. Danach wird 4,28g (15,0mmol) (R)-1,1'-Binaphthyl-2,2'-diol als Feststoff zugegeben. Nach weiteren 15 min. Rühren wird das Eisbad entfernt und über Nacht bei Raumtemperatur gerührt. Die Reaktionslösung wird unter Schutzgas vom Feststoff abfiltriert und das Lösungsmittel im Vakuum entfernt. Man erhält 4,4g (79 % der Theorie) ((R)-1,1'-Binaphthyl-2,2'-diyl)-iso-propyl-phosphit. ³¹P-NMR (162 MHz, CD₂Cl₂): δ = 147,1 ppm.

### Beispiel 3

### Herstellung von ((R)-1,1'-Binaphthyl-2,2'-diyl)-benzyl-phosphit

In einen ausgeheizten 250 ml Schlenk-Kolben legt man 100ml getrocknetes, entgastes Tetrahydrofuran und 2,5ml (13,6mmol) Benzyldichloridophosphit unter Argon Atmosphäre bei Raumtemperatur vor und kühlt auf 0°C ab. Man versetzt mit 3,82ml (27,4mmol) abs. Triethylamin und rührt für 5 min. Danach wird 3,90g (13,6mmol) (R)-1,1'-Binaphthyl-2,2'-diol als Feststoff zugegeben. Nach weiteren 15 min. Rühren wird das Eisbad entfernt und über Nacht bei Raumtemperatur gerührt. Die Reaktionslösung wird unter Schutzgas vom Feststoff abfiltriert und das Lösungsmittel im Vakuum entfernt. Man erhält 3,7g (73% der Theorie) ((R)-1,1'-Binaphthyl-2,2'-diyl)-benzyl-phosphit. ³¹P-NMR (162 MHz, CD₂Cl₂): δ = 140,7 ppm.

### Beispiel 4

### Herstellung von ((S)-1,1'-Binaphthyl-2,2'-diyl)-phenyl-phosphit

In einen ausgeheizten 100 ml Schlenk-Kolben legt man 25ml getrocknetes, entgastes Tetrahydrofuran und 1,27g (6,5mmol) Phenyldichloridophosphit unter Argon Atmosphäre bei Raumtemperatur vor und kühlt auf 0°C ab. Man versetzt mit 1,82g (13,1mmol) abs. Triethylamin und rührt für 5 min. Danach wird 1,87g (6,5mmol) S-1,1'-Binaphthyl-2,2'-diol als Feststoff zugegeben. Nach weiteren 15 min. rühren wird das Eisbad entfernt und über Nacht bei Raumtemperatur gerührt. Die Reaktionslösung wird unter Schutzgas vom Feststoff abfiltriert und das Lösungsmittel im Vakuum entfernt. Man erhält 1,91g (74% der Theorie) ((S)-1,1'-Binaphthyl-2,2'-diyl)-phenyl-phosphit. ³¹P-NMR (162 MHz, CD₂Cl₂): δ = 145,8 ppm.

### Beispiel 5

### Herstellung von [{((R)-1,1'-Binaphthyl-2,2'-diyl)-iso-propylphosphit}₂(COD)Rh]OTf

In einem trockenen Schlenck-Kolben wurden 74 mg Rh(COD)₂OTf (0.158 mmol) und 118 mg (0.315 mmol) ((R)-1,1'-Binaphthyl-2,2'-diyl)-iso-propyl-phosphit aus Beispiel 2 eingewogen, das Gefäß drei mal evakuiert und mit Argon belüftet und die Mischung mit 2 ml CH₂Cl₂ versetzt. Nach Erwärmen auf 50°C erhielt man eine orange Lösung und etwas braunen Rückstand. Daraufhin wurde mit 6 ml n-Hexan überschichtet. Nach einer Diffusionszeit von 10 h, konnten auf der Glaswand aufgewachsene, transparente, leicht gelbliche Kristalle isoliert werden, welche durch Einkristall-Röntgenstrukturanalyse analysiert wurden. ³¹P-NMR (162 MHz, CD₂Cl₂): 138, b; 133, d, ¹J_{PRh} = 221 Hz; 129, d, ¹J_{PRh} = 234 Hz; 125, b [ppm].

### Beispiel 6

### Herstellung von [{((R)-1,1'-Binaphthyl-2,2'-diyl)-iso-propyl-phosphit}₄Rh]OTf

In einem trockenen Schlenck-Kolben (oder zunächst getrennt in zwei Kolben) wurden 136 mg Rh(COD)₂OTf (0.291 mmol) und 435 mg (1.163 mmol) ((R)-1,1'-Binaphthyl-2,2'-diyl)-iso-propyl-phosphit aus Beispiel 2 eingewogen, das Gefäß 3mal evakuiert bzw. mit Argon belüftet und die Mischung mit 1 ml argonisiertem THF versetzt (bzw. die Gefäße argonisiert, je mit 2 ml CH₂Cl₂ versetzt und die Metall-Lsg. zur Ligand-Lsg. gegeben). Nach Durchmischung erhielt man eine leicht trübe Lösung. Daraufhin wurde mit 15 ml argonisiertem Hexan überschichtet. Nach einer Diffusionszeit von 16 h, konnte der entstandene braun gelbe Niederschlag abfiltriert werden. Nach Trocknung wurden 470 mg Produkt erhalten, entspricht 93% bezogen auf L₄RhOTf (1749 g/mol). ³¹P-NMR (162 MHz, CDCl₃): 138, b; 133, d, ¹J_{PRh} = 221 Hz; 129, d, ¹J_{PRh} = 234 Hz; 125, b [ppm].

### Beispiel 7

### Herstellung von [{((R)-1,1'-Binaphtbyl-2,2'-diyl)-iso-propyl-pbosphit}₄Cl₂Rh₂]

In einem trockenen Schlenck-Kolben wurden 39 mg Rh₂(COD)₂Cl₂ (0.079 mmol) und 118 mg (0.314 mmol) ((R)-1,1'-Binaphthyl-2,2'-diyl)-iso-propyl-phosphit aus Beispiel 2 eingewogen, das Gefäß 3mal evakuiert bzw. mit Argon belüftet und die Mischung mit 1 ml argonisiertem Toluol versetzt. Nach Durchmischung erhielt man eine Lösung. Daraufhin wurde mit 15 ml argonisiertem Hexan überschichtet. Nach Diffusion konnte der entstandene gelbe Niederschlag abfiltriert werden. Nach Trocknung wurden 125 mg Produkt erhalten, das entspricht 89%, bezogen auf L₄Rh₂Cl₂ (1774 g/mol). Die Substanz ist kaum löslich in Standard-Lösungsmitteln.

### Beispiel 8

### Herstellung von [{((R)-1,1'-Binaphthyl-2,2'-diyl)-iso-propyl-phosphit}₂-{(S,S)-1,2-diphenylethylen-1,2-diamin}Cl₂Ru]

In einem Rundkolben wurden 90 mg RuCl₂(p-Cymene) (0.147 mmol) und 220 mg (0.588 mmol) ((R)-1,1'-Binaphthyl-2,2'-diyl)-iso-propyl-phosphit aus Beispiel 2 eingewogen und unter Argon 10 ml entgastes DMF zugegeben. Man rührte 3h bei 90°C und erhielt eine rote Lösung. Man ließ auf RT kommen und fügte 62 mg (S,S)-DPEN (0.294 mmol) zu. Danach wurde weitere 24 h gerührt. Das DMF wurde im HV abgezogen und der Rückstand in 5 mL THF oder Dichlormethan gelöst und das Produkt mit 15 mL. Diethylether ausgefällt, abgesaugt und getrocknet (130 mg, 77%). (Roter Feststoff). FD-MS: 1133 (M⁺+1); ³¹P-NMR (162 MHz, CDCl₃): 155, s [ppm].

### Beispiel 9

### Herstellung von [{((R)-1,1'-Binaphthyl-2,2'-diyl)-neo-pentyl-phosphit}₂-{(S,S)-1,2-diphenylethylen-1,2-diamin}Cl₂Ru]

In einem Rundkolben wurden 90 mg RuCl₂(p-Cymene) (0.147 mmol) und 236 mg (0.588 mmol) ((R)-1,1'-Binaphthyl-2,2'-diyl)-neo-pentyl-phosphit, das analog zu Beispiel 2 gewonnen wurde, eingewogen und unter Argon 10 ml entgastes DMF zugegeben. Man rührte 3h bei 90°C und erhielt eine rote Lösung. Man ließ auf RT kommen und fügte 62 mg (S,S)-DPEN (0.294 mmol) zu. Danach wurde weitere 19 h gerührt. Das DMF wurde im HV abgezogen und der Rückstand in 5 mL THF oder Dichlormethan gelöst und das Produkt mit 15 mL Diethylether ausgefällt, abgesaugt und getrocknet (Roter Feststoff). ¹H-NMR (400 MHz, CDCl₃): 7.04-8.05, 30H; 6.89, t, 2H; ³J_{HH} = 8 Hz; 6.72, d, 2H; ³J_{HH} = 8 Hz; 4.44, d, 2H ; ³J_{HH} = 10 Hz; 4.15, d, 2H; ³J_{HH} = 10 Hz; 3.78, bs, 2H; 3.49, d, 2H ; ³J_{HH} = 10 Hz; 2.79, d, 2H ; ³J_{HH} = 10 Hz; 0.67, s, 18H [ppm]. ³¹P-NMR (162 MHz, CDCl₃): 155, s [ppm].

### Beispiel 10

### [{((R)-1,1'-Binaphthyl-2,2'-diyl)-iso-propyl-phosphit}₂(COD)Rh]BF₄

In einem Dreihals-Kolben wurden 19.70 g Rh(COD)₂BF₄ (48.5 mmol) eingewogen und unter Argon 50 mL THF und 150 mL Dichlormethan zugegeben. Danach wurden 27.77 g (86% NMR-Reinheit, 86 mmol) ((R)-1,1'-Binaphthyl-2,2'-diyl)-iso-propyl-phosphit aus Beispiel 2, vorher für 24 h im Vakuum getrocknet gelöst in 40 mL THF zugegeben. Die rötliche Lösung wurde 15 Minuten gerührt. Sodann wurde mit 800 mL n-Hexan schnell das Produkt gefällt. Unter Umständen bildet sich nur ein brauner öliger Rückstand am Glasboden. In diesem Fall wurde das Produkt erneut in 200 mL THF aufgenommen, mit 600 mL n-Hexan gefällt und abfiltriert. Orange/gelber, kristalliner Feststoff. Auswaage: 44,05 g, bezogen auf L₂Rh(COD)BF₄ ergibt sich eine Ausbeute von 93 - 98 %. ¹H-NMR (400 MHz, CDCl₃): 8.26, d, 2H, ³J_{HH} = 8 Hz; 8.08, d, 2H, ³J_{HH} = 8 Hz; 8.04, d, 2H, ³J_{HH} = 9 Hz; 7.89, d, 2H, ³J_{HH} = 8Hz; 7.81, d, 2H, ; ³J_{HH} = 9Hz; 7.58-7.47, m, 6H; 7.39-7.23, m, 8H; 5.8, m, 2H; 4.75, m, 2H; 4.32, m, 2H; 2.22-2.08, m, 4H; 1.94-1.84, m, 2H; 1.50, d, 6H, ³J_{HH} = 6Hz; 1.3, m, 8H [ppm]. ³¹P-NMR (162 MHz, CDCl₃): 120, d, ¹J_{PRh} = 258 Hz.

### Beispiel 11

### Herstellung von

### [{((R)-1,1'-Binaphthyl-2,2'-diyl)-iso-propyl-phosphit}₂(COD)Rh]SbF₆

In einem trockenen Schlenck-Kolben wurden 18 mg Rh(COD)₂SbF₆, (0.033 mmol) und 25 mg (0.066 mmol) ((R)-1,1'-Binaphthyl-2,2'-diyl)-iso-propyl-phosphit aus Beispiel 2 eingewogen, das Gefäß 3mal evakuiert bzw. mit Argon belüftet und die Mischung mit 0.3 mL argonisiertem CH₂Cl₂ versetzt. Danach wurde 2 h gerührt und das Produkt mit 5 mL Diethylether ausgefällt, abgesaugt und getrocknet. ¹H-NMR (400 MHz, CDCl₃): 8.27, d, 2H, ³J_{HH} = 8 Hz; 8.07, d, 2H, ³J_{HH} = 8 Hz; 8.03, d, 2H, ³J_{HH} = 9 Hz; 7.96, d, 2H, ³J_{HH} = 8 Hz; 7.85, d, 2H, ; ³J_{HH} = 9 Hz; 7.60-7.47, m, 6H; 7.39-7.23, m, 8H; 5.80, m, 2H; 4.77, m, 2H; 4.25, m, 2H; 2.20-2.03, m, 4H; 1.85, m, 2H; 1.53, d, 6H, ³J_{HH} = 6Hz; 1.27, m, 8H; [ppm]. ³¹P-NMR (162 MHz, CDCl₃):119, d, ¹J_{PRh} = 258 Hz.

### Beispiel 12

### Herstellung von [{((R)-1,1'-Binaphthyl-2,2'-diyl)-iso-propyl-phosphit}₄Rh]PF₆

In einem trockenen Schlenck-Kolben wurden 15 mg Rh(COD)₂PF₆ (0.033 mmol) und 25 mg (0.066 mmol) ((R)-1,1'-Binaphthyl-2,2'-diyl)-iso-propyl-phosphit aus Beispiel 2 eingewogen, das Gefäß 3mal evakuiert bzw. mit Argon belüftet und die Mischung mit 0.3 mL argonisiertem CH₂Cl₂ versetzt. Danach wurde 2 h gerührt und das Produkt mit 5 mL Diethylether ausgefällt, abgesaugt und getrocknet. ¹H-NMR (400 MHz, CDCl₃): 8.25, d, 2H, ³J_{HH} = 8 Hz; 8.05, d, 2H, ³J_{HH} = 8 Hz; 8.02, d, 2H, ³J_{HH} = 9 Hz; 7.95, d, 2H, ³J_{HH} = 8 Hz; 7.83, d, 2H, ; ³J_{HH} = 9 Hz; 7.60-7.45, m, 6H; 7.39-7.23, m, 8H; 5.78, m, 2H; 4.75, m, 2H; 4.25, m, 2H; 2.20-2.03, m, 4H; 1.85, m, 2H; 1.50, d, 6H, ³J_{HH} = 6Hz; 1.27, m, 8H; [ppm]. ³¹P-NMR (162 MHz, CDCl₃): 119, d, ¹J_{PRh} = 258 Hz.

## Patentansprüche

1. Verfahren zur Herstellung von Verbindungen der Formel (I), 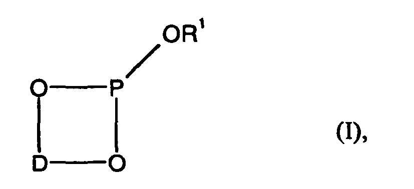 in der
D für einen unsubstituierten oder substituierten 1,1 '-Biphenyl-2,2'-diyl- oder 1,1'-Binaphthyl-2,2'-diyl-Rest steht und
R¹ für einen Rest steht, der ausgewählt ist aus der Gruppe C₁-C₁₂-Alkyl, C₂-C₁₂-Alkenyl, C₁-C₁₂-Halogenalkyl, C₅-C₁₅-Arylalkyl und C₄-C₁₄-Aryl wobei die Auflage gilt, dass
R¹ eine Molmasse von 215 oder weniger aufweist,
**dadurch gekennzeichnet, dass**
• in einem Schritt a)
- Verbindungen der Formel (II),
PHal₃ (II)
in der Hal jeweils unabhängig voneinander, vorzugsweise jedoch identisch für Chlor, Brom oder Iod, bevorzugt für Chlor steht,
- mit Verbindungen der Formel (III),
R¹-OH (III)
in der
R¹ die vorstehend genannte Bedeutung besitzt
zunächst zu Verbindungen der Formel (IV) umgesetzt werden
R¹OPHal₂ (IV)
in der
R¹ und Hal die vorstehend genannte Bedeutung besitzen,
• in einem Schritt b)
die gemäß a) erhaltenen Verbindungen der Formel (IV) destilliert und dabei gereinigt werden und
• in einem Schritt c)
die gemäß b) gereinigten Verbindungen der Formel (IV)
- mit Verbindungen der Formel (V)
D(OH)₂ (V)
in der
D die vorstehend genannte Bedeutung besitzt
zu Verbindungen der Formel (I) umgesetzt werden.

2. Verfahren nach Anspruch 1, **dadurch gekennzeichnet, dass** Schritt c) in Gegenwart einer Base durchgeführt wird.

3. Verfahren nach mindestens einem der Ansprüche 1 und 2, **dadurch gekennzeichnet, dass** R¹ für einen Rest steht, der ausgewählt ist aus der Gruppe C₁-C₈-Alkyl, C₅-C₁₅-Arylalkyl und C₄-C₁₄-Aryl, wobei die Auflage gilt, dass
R¹ eine Molmasse von 200 oder weniger aufweist.

4. Verfahren nach mindestens einem der Ansprüche 1 bis 3, **dadurch gekennzeichnet, dass** D für einen unsubstituierten oder substituierten 1,1'-Biphenyl-2,2'-diyl-Rest der Formel (VI) steht, 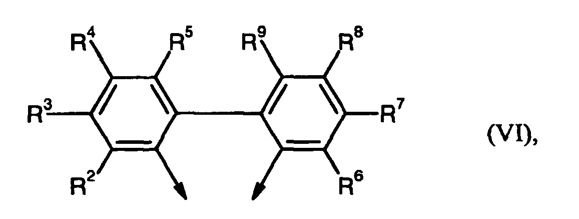 oder für einen unsubstituierten oder substituierten 1,1'-Binaphthyl-2,2'-diyl-Rest der Formel (VII), 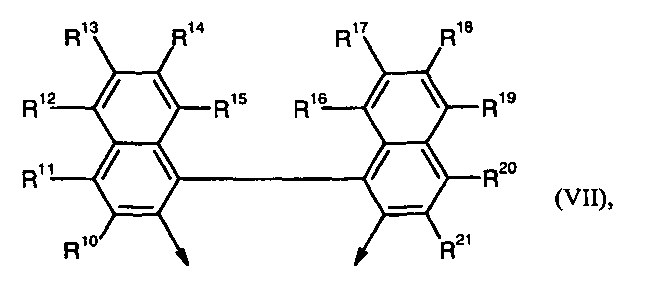 in denen die Reste
R² bis R²⁰ jeweils unabhängig voneinander ausgewählt sind aus der Gruppe Wasserstoff, Fluor, Chlor, Brom, Cyano, geschütztes Hydroxy, C₁-C₁₂-Alkyl, C₁-C₁₂-Halogenalkyl, C₁-C₁₂-Alkoxy, C₁-C₈-Alkylthio, freies oder geschütztes Formyl, C₄-C₁₄-Aryl, Tri(C₁-C₈-alkyl)siloxyl oder Resten der Formel (VIII),
A-B-E-F (VIII),
in der unabhängig voneinander
A fehlt oder für einen C₁-C₈-Alkylenrest steht und
B fehlt oder für Sauerstoff, Schwefel oder NR²¹ steht,
wobei
R²¹ für Wasserstoff, C₁-C₁₂-Alkyl oder C₄-C₁₄-Aryl steht und
E für eine Carbonyl-Gruppe steht und
F für R²², OR²², NHR²³ oder NR²³R²⁴ steht,
wobei
R²² für C₁-C₁₂-Alkyl oder C₆-C₁₀-Aryl und
R²³ und R²⁴ jeweils unabhängig voneinander für C₁-C₈-Alkyl oder C₄-C₁₄-Aryl stehen oder NR²³R²⁴ zusammen für einen cyclischen Aminorest mit 4 bis 12 Kohlenstoffatomen steht und wobei jeweils zwei benachbarte Reste aus R² bis R²⁰ zusammen auch einen nicht aromatischen Ring bilden können und weiterhin jeweils zwei der Reste aus R² bis R²⁰ verbrückend sein können.

5. Verfahren nach mindestens einem der Ansprüche 1 bis 4, **dadurch gekennzeichnet, dass** enantiomerenangereicherte Verbindungen der Formel (V) eingesetzt werden.

6. Verfahren nach mindestens einem der Ansprüche 1 bis 5, **dadurch gekennzeichnet, dass** folgende Verbindungen hergestellt werden:
((S)-5,5'-Dichlor-6,6'-dimethoxy-1,1'-biphenyl-2,2'-diyl)-isopropyl-phosphit
((R)-5,5'-Dichlor-6,6'-dimethoxy-1,1'-biphenyl-2,2'-diyl)-isopropyl-phosphit
((R)-5,5'-Dichlor-6,6'-dimethoxy-1,1'-biphenyl-2,2'-diyl)-(R)-1-phenylethyl-phosphit
((R)-5,5'-Dichlor-6,6'-dimethoxy-1,1'-biphenyl-2,2'-diyl)-(S)-1-phenylethyl-phosphit
((S)-5,5'-Dichlor-6,6'-dimethoxy-1,1'-biphenyl-2,2'-diyl)-(R)-1-phenylethyl-phosphit
((S)-5,5'-Dichlor-6,6'-dimethoxy-1,1'-biphenyl-2,2'-diyl)-(S)-1-phenylethyl-phosphit
((S)-5,5'-Dichlor-6,6'-dimethoxy-1,1'-biphenyl-2,2'-diyl)-cyclohexyl-phosphit
((R)-5,5'-Dichlor-6,6'-dimethoxy-1,1'-biphenyl-2,2'-diyl)-cyclohexyl-phosphit
((S)-5,5'-Dichlor-6,6'-dimethoxy-1,1'-biphenyl-2,2'-diyl)-phenyl-phosphit
((R)-5,5'-Dichlor-6,6'-dimethoxy-1,1'-biphenyl-2,2'-diyl)-phenyl-phosphit
((S)-5,5'-Dichlor-6,6'-dimethoxy-1,1'-biphenyl-2,2'-diyl)-2,6-dimethylphenyl-phosphit
((R)-5,5'-Dichlor-6,6'-dimethoxy-1,1'-biphenyl-2,2'-diyl)-2,6-dimethylphenyl-phosphit
((S)-5,5',6,6'-tetramethyl-3,3'-bis(tert.-butyl)-1,'-biphenyl-2,2'-diyl)-isopropyl-phosphit
((R)-5,5',6,6'-tetramethyl-3,3'-bis(tert.-butyl)-1,1'-biphenyl-2,2'-diyl)-isopropyl-phosphit
((S)-5,5',6,6'-tetramethyl-3,3'-bis(tert.-butyl)-1,1'-biphenyl-2,2'-diyl)-(rac)-1-phenylethyl-phosphit
((R)-5,5',6,6'-tetramethyl-3,3'-bis(tert.-butyl)-1,1'-biphenyl-2,2'-diyl)-(rac)-1-phenylethyl-phosphit
((S)-5,5',6,6'-tetramethyl-3,3'-bis(tert.-butyl)-1,1'-biphenyl-2,2'-diyl)-(S)-1-phenylethyl-phosphit
((R)-5,5',6,6'-tetramethyl-3,3'-bis(tert.-butyl)-1,1'-biphenyl-2,2'-diyl)-(S)-1-phenylethyl-phosphit
((S)-5,5',6,6'-tetramethyl-3,3'-bis(tert.-butyl)-1,1'-biphenyl-2,2'-diyl)-(R)-1-phenylethyl-phosphit
((R)-5,5',6,6'-tetramethyl-3,3'-bis(tert.-butyl)-1,1'-biphenyl-2,2'-diyl)-(R)-1-phenylethyl-phosphit
((S)-5,5',6,6'-tetramethyl-3,3'-bis(tert.-butyl)-1,1'-biphenyl-2,2 '-diyl)-diphenylmethyl-phosphit
((R)-5,5',6,6'-tetramethyl-3,3'-bis(tert.-butyl)-1,1'-biphenyl-2,2'-diyl)-diphenylmethyl-phosphit
((S)-S,5',6,6'-tetramethyl-3,3'-bis(tert.-butyl)-1,1'-biphenyl-2,2'-diyl)-methyl-phosphit
((R)-5,5',6,6'-tetramethyl-3,3'-bis(tert.-butyl)-1,1'-biphenyl-2,2'-diyl)-methyl-phosphit
((S)-5,5',6,6'-tetramethyl-3,3'-bis(tert.-butyl)-1,1'-biphenyl-2,2'-diyl)-2,6-dimethylphenyl-phosphit
((R)-5,5',6,6'-tetramethyl-3,3'-bis(tert.-butyl)-1,1'-biphenyl-2,2'-diyl)-2,6-dimethylphenyl-phosphit
((S)-5,5',6,6'-tetramcthyl-3,3'-bis(tert.-butyl)-1,1'-biphenyl-2,2'-diyl)-2,6-diisopropylphenyl-phosphit
((R)-5,5',6,6'-tetramethyl-3,3'-bis(tert.-butyl)-1,1'-biphenyl-2,2'-diyl)-2,6-diisopropylphenyl-phosphit
((S)-5,5',6,6'-tetramethyl-3,3'-bis(tert.-butyl)-1,1'-biphenyl-2,2'-diyl)-phenyl-phosphit
((R)-5,5',6,6'-tetramethyl-3,3'-bis(tert.-butyl)-1,1'-biphenyl-2,2'-diyl)-phenyl-phosphit
((S)-S,5',6,6'-tetramethyl-3,3'-bis(tert.-butyl)-1,1'-biphenyl-2,2'-diyl)-ethyl-phosphit
((R)-5,5',6,6'-tetramethyl-3,3'-bis(tert.-butyl)-1,1'-biphenyl-2,2'-diyl)-ethyl-phosphit
((S)-5,5',6,6'-tetramethyl-3,3'-bis(tert.-butyl)-1,1'-biphenyl-2,2'-diyl)-4-tert-butylphenyl-phosphit
((R)-5,5',6,6'-tetramethyl-3,3'-bis(tert.-butyl)-1,1'-biphenyl-2,2'-diyl)-4-tert-butylphenyl-phosphit
((S)-1,1'-Binaphthyl-2,2'-diyl)-isopropyl-phosphit
((R)-1,1'-Binaphthyl-2,2'-diyl)-isopropyl-phosphit
((S)-1,1'-Binaphthyl-2,2'-diyl)-neopentyl-phosphit
((R)-1,1'-Binaphthyl-2,2'-diyl)-neopentyl-phosphit
((S)-1,1'-Binaphthyl-2,2'-diyl)-phenyl-phosphit
((R)-1,1'-Binaphthyl-2,2'-diyl)-phenyl-phosphit
((S)-1,1'-Binaphthyl-2,2'-diyl)-benzyl-phosphit und
((R)-1,1'-Binaphthyl-2,2'-diyl)-benzyl-phosphit.

7. Verfahren nach mindestens einem der Ansprüche 1 bis 6, **dadurch gekennzeichnet, dass** die Destillation gemäß Schritt b) bei einem Druck von 0,001 bis 1000 hPa durchgeführt wird.

8. Verfahren nach mindestens einem der Ansprüche 1 bis 6, **dadurch gekennzeichnet, dass** zur Herstellung von Übergangsmetallkomplexen enthaltend Verbindungen der Formel (I) als Schritt d) die gemäß den Schritten a) bis c) erhaltenen Verbindungen der Formel (I) mit Übergangsmetallverbindungen umgesetzt werden.

9. Verfahren nach Anspruch 8, **dadurch gekennzeichnet, dass** die Lösungen von Verbindungen der Formel (I), wie sie gemäß Schritt c) erhalten werden, gegebenenfalls nach Abtrennung von Ausgefallenem, direkt in Schritt d) eingesetzt werden.

10. Verfahren nach Anspruch 8, **dadurch gekennzeichnet, dass** die Lösungen von Verbindungen der Formel (I), wie sie gemäß Schritt c) erhalten werden, gegebenenfalls nach Abtrennung von Ausgefallenem, eingeengt werden, die Verbindungen der Formel (I) erneut in Lösungsmittel aufgenommen und anschließend in Schritt d) eingesetzt werden

11. Verfahren nach mindestens einem der Ansprüche 8 bis 10, **dadurch gekennzeichnet, dass** Übergangsmetallverbindungen enthaltend Verbindungen der Formel (I) sind solche der Formel (Xa)
[(I)₄M¹]An¹ (Xa),
in der
(I) jeweils unabhängig bevorzugt identisch für eine Verbindung der Formel (I) steht und
M¹ für Rhodium oder Iridium steht und
An¹ für Methansulfonat, Trifluormethansulfonat, Tetrafluoroborat, Hexafluorophosphat, Perchlorat, Hexafluoroantimonat, Tetra(bis-3,5-trifluormethylphenyl)borat oder Tetraphenylborat steht oder
solche der Formel (Xb)
[(I)₂L₂M¹]An¹ (Xb),
in der
(I) jeweils unabhängig für eine Verbindung der Formel (I) steht und
M¹ für Rhodium oder Iridium steht und
An¹ für Methansulfonat, Trifluormethansulfonat, Tetrafluoroborat, Hexafluorophosphat, Perchlorat, Hexafluoroantimonat, Tetra(bis-3,5-trifluormethylphenyl)borat oder Tetraphenylborat steht und
L jeweils für ein C₂-C₁₂-Alken steht, oder
L₂ zusammen für ein (C₄-C₁₂)-Dien steht und
solche der Formel (XI)
[(I)₄HahM¹₂] (XI),
in der
(I) jeweils unabhängig für eine Verbindung der Formel (I) steht und
M¹ für Rhodium oder Iridium steht und
Hal für Chlor, Brom oder Iod steht oder
solche der Formel (XII)
[(I)₂(Aren)Hal₂Ru] (XII),
in der
(I) jeweils unabhängig für eine Verbindung der Formel (I) steht und
Aren für eine koordinierte aromatische Verbindung mit 6 bis 12 Ringkohlenstoff-atomen steht, die weiterhin mit bis zu 6 Resten substituiert sein kann, die jeweils unabhängig voneinander ausgewählt sind aus der Gruppe C₁-C₈-Alkyl, Benzyl und Phenyl steht und
Hal für Chlor, Brom oder Iod, bevorzugt für Chlor steht oder
solche der Formel (XIII)
[(I)₂(XIV)Hal₂Ru] (XIII),
in der
(I) jeweils unabhängig für eine Verbindung der Formel (I) steht und
Hal für Chlor, Brom, Iod, bevorzugt für Chlor steht,
(XIV) für Verbindungen der Formel (XIV) steht 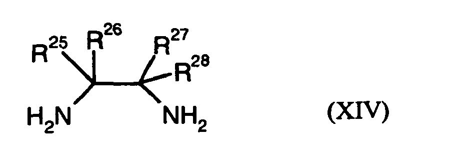
in der
R²⁵, R²⁶, R²⁷ und R²⁸ jeweils unabhängig voneinander für Wasserstoff, C₁-C₁₂-Alkyl, C₄-C₁₄-Aryl oder C₅-C₁₅-Arylalkyl oder jeweils zwei Reste zusammen für einen geradkettigen oder verzweigten C₃-C₁₂-Alkylen-Rest stehen.

12. Übergangsmetallkomplexe der Formeln:
[(I)₄M¹]An¹ (Xa),
[(I)₄Hal₂M¹₂] (XI),
[(I)₂(Aren)Hal₂Ru] (XII),
[(I)₂(XIV)HahRu] (XIII),
worin
(I) jeweils unabhängig für eine Verbindung der Formel (I) mit der in Anspruch 1 angegebenen Bedeutung steht und
M¹ für Rhodium oder Iridium steht
An¹ für Methansulfonat, Trifluormethansulfonat, Tetrafluoroborat, Hexafluorophosphat, Perchlorat, Hexafluoroantimonat, Tetra(bis-3,5-trifluormethylphenyl)borat oder Tetraphenylborat steht,
Hal für Chlor, Brom oder Iod steht,
Aren für eine koordinierte aromatische Verbindung mit 6 bis 12 Ringkohlenstoffatomen steht, die weiterhin mit bis zu 6 Resten substituiert sein kann, die jeweils unabhängig voneinander ausgewählt sind aus der Gruppe C₁-C₈-Alkyl, Benzyl und Phenyl steht,
und
(XIV) für Verbindungen der Formel (XIV) steht 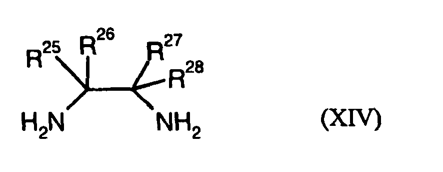
in der
R²⁵, R²⁶, R²⁷ und R²⁸ jeweils unabhängig voneinander für Wasserstoff, C₁-C₁₂-Alkyl, C₄-C₁₄-Aryl oder C₅-C₁₅-Arylalkyl oder jeweils zwei Reste zusammen für einen geradkettigen oder verzweigten C₃-C₁₂-Alkylen-Rest stehen.

13. Übergangsmetallkomplexe nach Anspruch 12, worin (I) ausgewählt wird aus:
((S)-5,5'-Dichlor-6,6'-dimethoxy-1,1'-biphenyl-2,2'-diyl)-isopropyl-phosphit
((R)-5,5'-Dichlor-6,6'-dimethoxy-1,1'-biphenyl-2,2'-diyl)-isopropyl-phosphit
((R)-5,5'-Dichlor-6,6'-dimethoxy-1,1'-biphenyl-2,2'-diyl)-(R)-1-phenylethyl-phosphit
((R)-5,5'-Dichlor-6,6'-dimethoxy-1,1 1'-biphenyl-2,2'-diyl)-(S)-1-phenylethyl-phosphit
((S)-5,5'-Dichlor-6,6'-dimethoxy-1,1'-biphenyl-2,2'-diyl)-(R)-1-phenylethyl-phosphit
((S)-5,5'-Dichlor-6,6'-dimethoxy-1,1'-biphenyl-2,2'-diyl)-(S)-1-phenylethyl-phosphit
((S)-5,5'-Dichlor-6,6'-dimethoxy-1,1 '-biphenyl-2,2'-diyl)-cyclohexyl-phosphit
((R)-5,5'-Dichlor-6,6'-dimethoxy-1,1'-biphenyl-2,2'-diyl)-cyclohexyl-phosphit
((S)-5,5'-Dichlor-6,6'-dimethoxy-1, '-biphenyl-2,2'-diyl)-phenyl-phosphit
((R)-5,5'-Dichlor-6,6'-dimethoxy-1, 1'-biphenyl-2,2'-diyl)-phenyl-phosphit
((S)-5,5'-Dichlor-6,6'-dimethoxy-1,1'-biphenyl-2,2'-diyl)-2,6-dimethylphenyl-phosphit
((R)-5,5'-Dichlor-6,6'-dimethoxy-1,1'-biphenyl-2,2'-diyl)-2,6-dimethylphenyl-phosphit
((S)-5,5',6,6'-tetramethyl-3,3'-bis(tert.-butyl)-1,1'-biphenyl-2,2'-diyl)-isopropyl-phosphit
((R)-5,5',6,6'-tetramethyl-3,3'-bis(tert.-butyl)-1,1'-biphenyl-2,2'-diyl)-isopropyl-phosphit
((S)-5,5',6,6'-tetramethyl-3,3'-bis(tert.-butyl)-1,1'-biphenyl-2,2'-diyl)-(rac)-1-phenylethyl-phosphit
((R)-5,5',6,6'-tetramethyl-3,3'-bis(tert.-butyl)-1,1'-biphenyl-2,2'-diyl)-(rac)-1-phenylethyl-phosphit
((S)-5,5',6,6'-tetramethyl-3,3'-bis(tert.-butyl)-1,1'-biphenyl-2,2 '-diyl)-(S)-1 - phenylethyl-phosphit
((R)-5,5',6,6'-tetramethyl-3,3'-bis(tert.-butyl)-1,1'-biphenyl-2,2'-diyl)-(S)-1-phenylethyl-phosphit
((S)-5,5',6,6'-tetramethyl-3,3'-bis(tert.-butyl)-1,1'-biphenyl-2,2'-diyl)-(R)-1-phenylethyl-phosphit
((R)-5,5',6,6'-tetramethyl-3,3'-bis(tert.-butyl)-1,1'-biphenyl-2,2'-diyl)-(R)-1-phenylethyl-phosphit
((S)-5,5',6,6'-tetramethyl-3,3'-bis(tert.-butyl)-1,1'-biphenyl-2,2'-diyl)-diphenylmethyl-phosphit
((R)-5,5',6,6'-tetramethyl-3,3'-bis(tert.-butyl)-1,1'-biphenyl-2,2'-diyl)-diphenylmethyl-phosphit
((S)-5,5',6,6'-tetramethyl-3,3'-bis(tert.-butyl)-1,1'-biphenyl-2,2'-diyl)-methyl-phosphit
((R)-5,5',6,6'-tetramethyl-3,3'-bis(tert.-butyl)-1,1'-biphenyl-2,2'-diyl)-methyl-phosphit
((S)-5,5',6,6'-tetramethyl-3,3'-bis(tert.-butyl)-1,1'-biphenyl-2,2'-diyl)-2,6-dimethylphenyl-phosphit
((R)-5,5',6,6'-tetramethyl-3,3'-bis(tert.-butyl)-1,1'-biphenyl-2,2'-diyl)-2,6-dimethylphenyl-phosphit
((S)-5,5',6,6'-tetramethyl-3,3'-bis(tert.-butyl)-1,1'-biphenyl-2,2'-diyl)-2,6-diisopropylphenyl-phosphit
((R)-5,5',6,6'-tetramethyl-3,3'-bis(tert.-butyl)-1,1'-biphenyl-2,2'-diyl)-2,6-diisopropylphenyl-phosphit
((S)-5,5',6,6'-tetramethyl-3,3'-bis(tert.-butyl)-1,1'-biphenyl-2,2'-diyl)-phenyl-phosphit
((R)-5,5',6,6'-tetramethyl-3,3'-bis(tert.-butyl)-1,1'-biphenyl-2,2'-diyl)-phenyl-phosphit
((S)-5,5',6,6'-tetramethyl-3,3'-bis(tert.-butyl)-1,1'-biphenyl-2,2'-diyl)-ethyl-phosphit
((R)-5,5',6,6'-tetramethyl-3,3'-bis(tert.-butyl)-1,1'-biphenyl-2,2'-diyl)-ethyl-phosphit
((S)-5,5',6,6'-tetramethyl-3,3'-bis(tert.-butyl)-1,1'-biphenyl-2,2'-diyl)-4-tert-butylphenyl-phosphit
((R)-5,5',6,6'-tetramethyl-3,3'-bis(tert.-butyl)-1,1'-biphenyl-2,2'-diyl)-4-tert-butylphenyl-phosphit
((S)-1,1'-Binaphthyl-2,2'-diyl)-isopropyl-phosphit
((R)-1,1'-Binaphthyl-2,2'-diyl)-isopropyl-phosphit
((S)-1,1'-Binaphthyl-2,2'-diyl)-neopentyl-phosphit
((R)-1,1'-Binaphthyl-2,2'-diyl)-neopentyl-phosphit
((S)-1,1'-Binaphthyl-2,2'-diyl)-phenyl-phosphit
((R)-1,'-Binaphthyl-2,2'-diyl)-phenyl-phosphit
((S)-1,1'-Binaphthyl-2,2'-diyl)-benzyl-phosphit und
((R)-1,1'-Binaphthyl-2,2'-diyl)-benzyl-phosphit.

14. Verwendung von Übergangsmetallkomplexen nach Anspruch 12 oder 13 als Katalysatoren.

15. Verwendung von Übergangsmetallkomplexen nach Anspruch 12 oder 13 in einem Verfahren zur Herstellung von stereoisomerenangereicherten Verbindungen.

16. Verfahren zur Herstellung von stereoisomerenangereicherten Verbindungen durch asymmetrische Synthese, **dadurch gekennzeichnet, dass** als Katalysatoren Übergangsmetallkomplexe nach Anspruch 12 oder 13 verwendet werden.

## Claims

1. Process for preparing compounds of the formula (I) 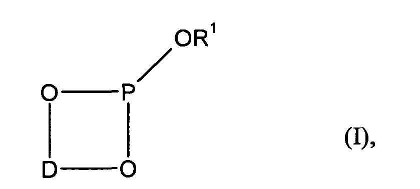 where
D is an unsubstituted or substituted 1,1'-biphenyl-2,2'-diyl- or 1,1'-binaphthyl-2,2'-diyl radical and
R¹ is a radical selected from the group of C₁-C₁₂-alkyl, C₂-C₁₂-alkenyl, C₁-C₁₂-halogenalkyl, C₅-C₁₅-arylalkyl and C₄-C₁₄-aryl, with the proviso that
R¹ has a molar mass of 215 or less,
**characterized in that**
• in a step a)
- compounds of the formula (II),
PHal₃ (II)
where Hal is in each case independently, but preferably identically, chlorine, bromine or iodine, preferably chlorine,
- are initially reacted with compounds of the formula (III),
R¹-OH (III)
where
R¹ is as defined above
to give compounds of the formula (IV)
R¹OPHal₂ (IV)
where
R¹ and Hal are each as defined above,
• in a step b)
the compounds of the formula (IV) of a) are distilled and at the same time purified and
• in a step c),
the compounds of the formula (IV) purified in b)
- are reacted with compounds of the formula (V)
D(OH)₂ (V)
where
D is as defined above
to give compounds of the formula (I).

2. Process according to Claim 1, **characterized in that** step c) is carried out in the presence of a base.

3. Process according to at least one of Claims 1 and 2, **characterized in that** R¹ is a radical which is selected from the group of C₁-C₈-alkyl, C₅-C₁₅-arylalkyl and C₄-C₁₄-aryl, with the proviso that
R¹ has a molar mass of 200 or less.

4. Process according to at least one of Claims 1 to 3, **characterized in that** D is an unsubstituted or substituted 1,1'-biphenyl-2,2'-diyl radical of the formula (VI) 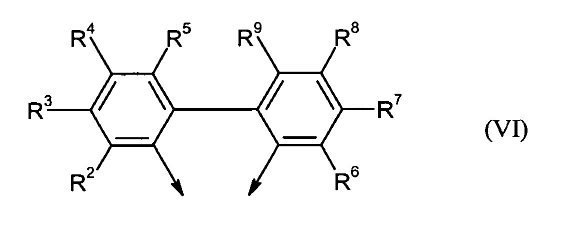 or is an unsubstituted or substituted 1,1'-binaphthyl-2,2'-diyl radical of the formula (VII) 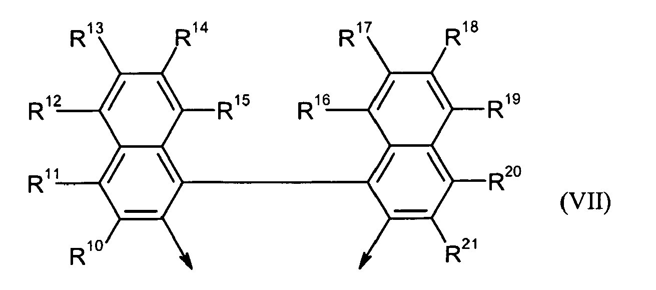 where the radicals
R² to R²⁰ are in each case independently selected from the group of hydrogen, fluorine, chlorine, bromine, cyano, protected hydroxyl, C₁-C₁₂-alkyl, C₁-C₁₂-halogenalkyl, C₁-C₁₂-alkoxy, C₁-C₈-alkylthio, free or protected formyl, C₄-C₁₄-aryl, tri(C₁-C₈-alkyl)siloxyl or radicals of the formula (VIII)
A-B-E-F (VIII)
where, each independently,
A is absent or is a C₁-C₈-alkylene radical and
B is absent or is oxygen, sulphur or NR²¹
where
R²¹ is hydrogen, C₁-C₁₂-alkyl or C₄-C₁₄-aryl and
E is a carbonyl group and
F is R²², OR²², NHR²³ or NR²³R²⁴
where
R²² is C₁-C₁₂-alkyl or C₆-C₁₀-aryl and
R²³ and R²⁴ are each independently C₁-C₈-alkyl or C₄-C₁₄-aryl, or NR²³R²⁴ together is a cyclic amino radical having 4 to 12 carbon atoms, and in each case two adjacent radicals from R² to R²⁰ together may form a nonaromatic ring and in each case two of the radicals from R² to R²⁰ may also each be bridging.

5. Process according to at least one of Claims 1 to 4, **characterized in that** enationmerically enriched compounds of the formula (V) are used.

6. Process according to at least one of Claims 1 to 5, **characterized in that** the following compounds are prepared:
((S)-5,5 -dichloro-6,6'-dimethoxy-1,1'-biphenyl-2,2'-diyl)isopropyl phosphite
((R)-5,5'-dichloro-6,6'-dimethoxy-1,1'-biphenyl-2,2'-diyl)isopropyl phosphite
((R)-5,5'-dichloro-6,6'-dimethoxy-1,1'-biphenyl-2,2'-diyl)-(R)-1-phenylethyl phosphite
((R)-5,5'-dichloro-6,6'-dimethoxy-1,1'-biphenyl-2,2'-diyl)-(S)-1-phenylethyl phosphite
((S)-5,5'-dichloro-6,6'-dimethoxy-1,1'-biphenyl-2,2'-diyl)-(R)-1-phenylethyl phosphite
((S)-5,5'-dichloro-6,6'-dimethoxy-1,1'-biphenyl-2,2'-diyl)-(S)-1-phenylethyl phosphite
((S)-5,5'-dichloro-6,6'-dimethoxy-1,1'-biphenyl-2,2'-diyl)cyclohexyl phosphite
((R)-5,5'-dichloro-6,6'-dimethoxy-1,1'-biphenyl-2,2'-diyl)cyclohexyl phosphite
((S)-5,5'-dichloro-6,6'-dimethoxy-1,1'-biphenyl-2,2'-diyl)phenyl phosphite ((R)-5,5'-dichloro-6,6'-dimethoxy-1,1'-biphenyl-2,2'-diyl)phenyl phosphite
((S)-5,5'-dichloro-6,6'-dimethoxy-1,1'-biphenyl-2,2'-diyl)-2,6-dimethylphenyl phosphite
((R)-5,5'-dichloro-6,6'-dimethoxy-1,1'-biphenyl-2,2'-diyl)-2,6-dimethylphenyl phosphite
((S)-5,5 ',6,6'-tetramethyl-3,3'-bis(tert-butyl)-1,1'-biphenyl-2,2'-diyl)-isopropyl phosphite
((R)-5,5',6,6'-tetramethyl-3,3'-bis(tert-butyl)-1,1'-biphenyl-2,2'-diyl)-isopropyl phosphite
((S)-5,5',6,6'-tetramethyl-3,3'-bis(tert-butyl)-1,1'-biphenyl-2,2'-diyl)-(rac)-1-phenylethyl phosphite
((R)-5,5',6,6'-tetramethyl-3,3'-bis(tert-butyl)-1,1'-biphenyl-2,2'-diyl)-(rac)-1-phenylethyl phosphite
((S)-5,5',6,6'-tetramethyl-3,3'-bis(tert-butyl)-1,1'-biphenyl-2,2'-diyl)-(S)-1-phenylethyl phosphite
((R)-5,5',6,6'-tetramethyl-3,3'-bis(tert-butyl)-1,1'-biphenyl-2,2'-diyl)-(S)-1-phenylethyl phosphite
((S)-5,5 ',6,6'-tetramethyl-3,3'-bis(tert-butyl)-1,1'-biphenyl-2,2'-diyl)-(R)-1-phenylethyl phosphite
((R)-5,5',6,6'-tetramethyl-3,3'-bis(tert-butyl)-1,1'-biphenyl-2,2'-diyl)-(R)-1-phenylethyl phosphite
((S)-5,5',6,6'-tetramethyl-3,3'-bis(tert-butyl)-1,1'-biphenyl-2,2'-diyl)-diphenylmethyl phosphite
((R)-5,5',6,6'-tetramethyl-3,3'-bis(tert-butyl)-1,1'-biphenyl-2,2'-diyl)-diphenylmethyl phosphite
((S)-5,5',6,6'-tetramethyl-3,3'-bis(tert-butyl)-1,1'-biphenyl-2,2'-diyl)methyl phosphite
((R)-5,5',6,6'-tetramethyl-3,3'-bis(tert-butyl)-1,1'-biphenyl-2,2'-diyl)methyl phosphite
((S)-5,5',6,6'-tetramethyl-3,3'-bis(tert-butyl)-1,1'-biphenyl-2,2'-diyl)-2,6-dimethylphenyl phosphite
((R)-5,5',6,6'-tetramethyl-3,3'-bis(tert-butyl)-1,1'-biphenyl-2,2'-diyl)-2,6-dimethylphenyl phosphite
((S)-5,5',6,6'-tetramethyl-3,3'-bis(tert-butyl)-1,1'-biphenyl-2,2'-diyl)-2,6-diiso-propylphenyl phosphite
((R)-5,5',6,6'-tetramethyl-3,3'-bis(tert-butyl)-1,1'-biphenyl-2,2'-diyl)-2,6-diiso-propylphenyl phosphite
((S)-5,5',6,6'-tetramethyl-3,3'-bis(tert-butyl)-1,1'-biphenyl-2,2'-diyl)phenyl phosphite
((R)-5,5',6,6'-tetramethyl-3,3'-bis(tert-butyl)-1,1'-biphenyl-2,2'-diyl)phenyl phosphite
((S)-5,5',6,6'-tetramethyl-3,3'-bis(tert-butyl)-1,1'-biphenyl-2,2'-diyl)ethyl phosphite
((R)-5,5',6,6'-tetramethyl-3,3'-bis(tert-butyl)-1,1'-biphenyl-2,2'-diyl)ethyl phosphite
((S)-5,5',6,6'-tetramethyl-3,3'-bis(tert-butyl)-1,1'-biphenyl-2,2'-diyl)-4-tert-butylphenyl phosphite
((R)-5,5',6,6'-tetramethyl-3,3'-bis(tert-butyl)-1,1'-biphenyl-2,2'-diyl)-4-tert-butylphenyl phosphite
((S)-1,1'-binaphthyl-2,2'-diyl)isopropyl phosphite
((R)-1,1'-binaphthyl-2,2'-diyl)isopropyl phosphite
((S)-1,1'-binaphthyl-2,2'-diyl)neopentyl phosphite
((R)-1,1'-binaphthyl-2,2'-diyl)neopentyl phosphite
((S)-1,1'-binaphthyl-2,2'-diyl)phenyl phosphite
((R)-1,1'-binaphthyl-2,2'-diyl)phenyl phosphite
((S)-1,1'-binaphthyl-2,2'-diyl)benzyl phosphite and
((R)-1,1'-binaphthyl-2,2'-diyl)benzyl phosphite.

7. Process according to at least one of Claims 1 to 6, **characterized in that** the distillation in step b) is carried out a pressure from 0.001 to 1000 hPa.

8. Process according to at least one of Claims 1 to 6, **characterized in that**, to prepare transition metal complexes containing compounds of the formula (I) as step d), the compounds of the formula (I) obtained in steps a) to c) are reacted with transition metal compounds.

9. Process according to Claim 8, **characterized in that** the solutions of compounds of the formula (I), as obtained in step c), are used directly in step d), optionally after removing precipitates.

10. Process according to Claim 8, **characterized in that** the solutions of compounds of the formula (I), as obtained in step c), are concentrated, optionally after removing precipitates, the compounds of the formula (I) are taken up again in solvents and subsequently used in step d).

11. Process according to at least one of Claims 8 to 10, **characterized in that** transition metal compounds containing compounds of the formula (I) are those of the formula (Xa),
[(I)₄M¹]An¹ (Xa)
where
(I) is in each case independently, preferably identically, a compound of the formula (I) and
M¹ is rhodium or iridium and
An¹ is methanesulphonate, trifluoromethanesulphonate, tetrafluoroborate, hexafluorophosphate, perchlorate, hexafluoroantimonate, tetra(bis 3,5-trifluoromethylphenyl)borate or tetraphenylborate or
those of the formula (Xb)
[(I)₂L₂M¹]An¹ (Xb)
where
(I) is in each case independently a compound of the formula (I) and
M¹ is rhodium or iridium and
An¹ is methanesulphonate, trifluoromethanesulphonate, tetrafluoroborate, hexafluorophosphate, perchlorate, hexafluoroantimonate, tetra(bis 3,5-trifluoromethylphenyl)borate or tetraphenylborate and
L is in each case a C₂-C₁₂-alkene, or
L₂ together is a (C₄-C₁₂)-diene and
those of the formula (XI)
[(I)₄HahM¹₂] (XI)
where
(I) is in each case independently a compound of the formula (I) and
M¹ is rhodium or iridium and
Hal is chlorine, bromine or iodine or
those of the formula (XII)
[(I)₂(arene)Hal₂Ru] (XII),
where
(I) is in each case independently a compound of the formula (I) and
arene is a coordinated aromatic compound having 6 to 12 ring carbon atoms which may also be substituted by up to 6 radicals which are each independently selected from the group of C₁-C₈-alkyl, benzyl and phenyl and
Hal is chlorine, bromine or iodine, preferably chlorine, or
those of the formula (XIII)
[(I)₂(XIV)Hal₂Ru] (XIII)
where
(I) is in each case independently a compound of the formula (I) and
Hal is chlorine, bromine or iodine, preferably chlorine,
(XIV) represents compounds of the formula (XIV) 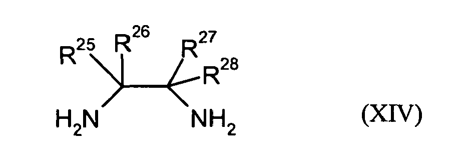
where
R²⁵, R²⁶, R²⁷ and R²⁸ are each independently hydrogen, C₁-C₁₂-alkyl, C₄-C₁₄-aryl or C₅-C₁₅-arylalkyl, or in each case two radicals together are a straight-chain or branched C₃-C₁₂-alkylene radical.

12. Transition metal complexes of the formulae:
[(I)₄M¹]An¹ (Xa),
[(I)₄Hal₂M¹₂] (XI),
[(I)₂(arene)Hal₂Ru] (XII),
[(I)₂(XIV)Hal₂Ru] (XIII),
where
(I) is in each case independently a compound of the formula (I) as defined in Claim 1 and
M¹ is rhodium or iridium
An¹ is methanesulphonate, trifluoromethanesulphonate, tetrafluoroborate, hexafluorophosphate, perchlorate, hexafluoroantimonate, tetra(bis 3,5-trifluoromethylphenyl)borate or tetraphenylborate,
Hal is chlorine, bromine or iodine,
arene is a coordinated aromatic compound having 6 to 12 ring carbon atoms which may also be substituted by up to 6 radicals which are each independently selected from the group of C₁-C₈-alkyl, benzyl and phenyl,
and
(XIV) represents compounds of the formula (XIV) 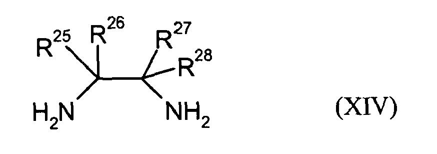
where
R25, R²⁶, R²⁷ and R²⁸ are each independently hydrogen, C₁-C₁₂-alkyl, C₄-C₁₄-aryl or C₅-C₁₅-arylalkyl, or in each case two radicals together are a straight-chain or branched C₃-C₁₂-alkylene radical.

13. Transition metal complexes according to Claim 12, in which (I) is selected from:
((S)-5,5'-dichloro-6,6'-dimethoxy-1,1'-biphenyl-2,2'-diyl)isopropyl phosphite
((R)-5,5'-dichloro-6,6'-dimethoxy-1,1'-biphenyl-2,2'-diyl)isopropyl phosphite
((R)-5,5'-dichloro-6,6'-dimethoxy-1,1'-biphenyl-2,2'-diyl)-(R)-1-phenylethyl phosphite
((R)-5,5'-dichloro-6,6'-dimethoxy-1,1'-biphenyl-2,2'-diyl)-(S)-1-phenylethyl phosphite
((S)-5,5'-dichloro-6,6'-dimethoxy-1,1'-biphenyl-2,2'-diyl)-(R)-1-phenylethyl phosphite
((S)-5,5'-dichloro-6,6'-dimethoxy-1,1'-biphenyl-2,2'-diyl)-(S)-1-phenylethyl phosphite
((S)-5,5'-dichloro-6,6'-dimethoxy-1,1'-biphenyl-2,2'-diyl)cyclohexyl phosphite
((R)-5,5'-dichloro-6,6'-dimethoxy-1,1'-biphenyl-2,2'-diyl)cyclohexyl phosphite
((S)-5,5'-dichloro-6,6'-dimethoxy-1,1'-biphenyl-2,2'-diyl)phenyl phosphite ((R)-5,5'-dichloro-6,6'-dimethoxy-1,1'-biphenyl-2,2'-diyl)phenyl phosphite
((S)-5,5'-dichloro-6,6'-dimethoxy-1,1'-biphenyl-2,2'-diyl)-2,6-dimethylphenyl phosphite
((R)-5,5'-dichloro-6,6'-dimethoxy-1,1'-biphenyl-2,2'-diyl)-2,6-dimethylphenyl phosphite
((S)-5,5',6,6'-tetramethyl-3,3'-bis(tert-butyl)-1,1'-biphenyl-2,2'-diyl)-isopropyl phosphite
((R)-5,5',6,6'-tetramethyl-3,3'-bis(tert-butyl)-1,1'-biphenyl-2,2'-diyl)-isopropyl phosphite
((8)-5,5',6,6'-tetramethyl-3,3'-bis(tert-butyl)-1,1'-biphenyl-2,2'-diyl)-(rac)-1-phenylethyl phosphite
((R)-5,5',6,6'-tetramethyl-3,3'-bis(tert-butyl)-1,1'-biphenyl-2,2'-diyl)-(rac)-1-phenylethyl phosphite
((S)-5,5',6,6'-tetramethyl-3,3'-bis(tert-butyl)-1,1'-biphenyl-2,2'-diyl)-(S)-1-phenylethyl phosphite
((R)-5,5',6,6'-tetramethyl-3,3'-bis(tert-butyl)-1,1'-biphenyl-2,2'-diyl)-(S)-1-phenylethyl phosphite
((S)-5,5',6,6'-tetramethyl-3,3'-bis(tert-butyl)-1,1'-biphenyl-2,2'-diyl)-(R)-1-phenylethyl phosphite
((R)-5,5',6,6'-tetramethyl-3,3'-bis(tert-butyl)-1,1'-biphenyl-2,2'-diyl)-(R)-1-phenylethyl phosphite
((S)-5,5',6,6'-tetramethyl-3,3'-bis(tert-butyl)-1,1'-biphenyl-2,2'-diyl)-diphenylmethyl phosphite
((R)-5,5',6,6'-tetramethyl-3,3'-bis(tert-butyl)-1,1'-biphenyl-2,2'-diyl)-diphenylmethyl phosphite
((S)-5,5',6,6'-tetramethyl-3,3'-bis(tert-butyl)-1,1'-biphenyl-2,2'-diyl)methyl phosphite
((R)-5,5',6,6'-tetramethyl-3,3'-bis(tert-butyl)-1,1'-biphenyl-2,2'-diyl)methyl phosphite
((S)-5,5',6,6'-tetramethyl-3,3'-bis(tert-butyl)-1,1'-biphenyl-2,2'-diyl)-2,6-dimethylphenyl phosphite
((R)-5,5',6,6'-tetramethyl-3,3'-bis(tert-butyl)-1,1'-biphenyl-2,2'-diyl)-2,6-dimethylphenyl phosphite
((S)-5,5',6,6'-tetramethyl-3,3'-bis(tert-butyl)-1,1'-biphenyl-2,2'-diyl)-2,6-diiso-propylphenyl phosphite
((R)-5,5',6,6'-tetramethyl-3,3'-bis(tert-butyl)-1,1'-biphenyl-2,2'-diyl)-2,6-diiso-propylphenyl phosphite
((S)-5,5',6,6'-tetramethyl-3,3'-bis(tert-butyl)-1,1'-biphenyl-2,2'-diyl)phenyl phosphite
((R)-5,5',6,6'-tetramethyl-3,3'-bis(tert-butyl)-1,1'-biphenyl-2,2'-diyl)phenyl phosphite
((S)-5,5',6,6'-tetramethyl-3,3'-bis(tert-butyl)-1,1'-biphenyl-2,2'-diyl)ethyl phosphite
((R)-5,5',6,6'-tetramethyl-3,3'-bis(tert-butyl)-1,1'-biphenyl-2,2'-diyl)ethyl phosphite
((S)-5,5',6,6'-tetramethyl-3,3'-bis(tert-butyl)-1,1'-biphenyl-2,2'-diyl)-4-tert-butylphenyl phosphite
((R)-5,5',6,6'-tetramethyl-3,3'-bis(tert-butyl)-1,1'-biphenyl-2,2'-diyl)-4-tert-butylphenyl phosphite
((S)-1,1'-binaphthyl-2,2'-diyl)isopropyl phosphite
((R)-1,1'-binaphthyl-2,2'-diyl)isopropyl phosphite
((S)-1,1'-binaphthyl-2,2'-diyl)neopentyl phosphite
((R)-1,1'-binaphthyl-2,2'-diyl)neopentyl phosphite
((S)-1,1'-binaphthyl-2,2'-diyl)phenyl phosphite
((R)-1,1'-binaphthyl-2,2'-diyl)phenyl phosphite
((S)-1,1'-binaphthyl-2,2'-diyl)benzyl phosphite and
((R)-1,1'-binaphthyl-2,2'-diyl)benzyl phosphite.

14. Use of transition metal complexes according to Claim 12 or 13 as catalysts.

15. Use of transition metal complexes according to Claim 12 or 13 in a process for preparing stereoisomerically enriched compounds.

16. Process for preparing stereoisomerically enriched compounds by asymmetric synthesis, **characterized in that** the catalysts used are transition metal complexes according to Claim 12 or 13.

## Revendications

1. Procédé de préparation de composés de formule (I) 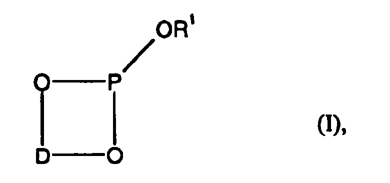 dans laquelle :
D représente un radical 1,1'-biphényl-2,2'-diyle ou 1,1'-binaphtyl-2,2'-diyle non substitué ou substitué et
R¹ représente un radical qui est sélectionné parmi le groupe alkyle en C₁-C₁₂, alcényle en C₂-C₁₂, halogénoalkyle en C₁-C₁₂, arylalkyle en C₅-C₁₅ et aryle en C₄-C₁₄, avec l'obligation que
R¹ présente une masse molaire de 215 ou moins,
**caractérisé en ce que** :
• dans une étape a)
- des composés de formule (II),
**PHal₃** **(II)**
dans laquelle Hal représente respectivement indépendamment les uns des autres, de préférence cependant de manière identique, du chlore, du brome ou de l'iode, de manière préférée du chlore, sont amenés à réagir
- avec des composés de formule (III),
**R¹-OH** **(III)**
dans laquelle :
R¹ possède la signification mentionnée ci-dessus
pour donner d'abord des composés de formule (IV)
**R¹OPHal₂** **(IV)**
dans laquelle :
R¹ et Hal possèdent la signification mentionnée ci-dessus :
• dans une étape b)
les composés de formule (IV) obtenus selon a) sont distillés et par conséquent purifiés et
• dans une étape c)
les composés de formule (IV) purifiés selon b) sont amenés à réagir
- avec des composés de formule (V)
**D(OH)₂** **(V)**
dans laquelle :
D possède la signification mentionnée ci-dessus
pour donner des composés de formule (I).

2. Procédé selon la revendication 1, **caractérisé en ce que** l'étape c) est mise en oeuvre en présence d'une base.

3. Procédé selon l'une au moins des revendications 1 et 2, **caractérisé en ce que** R¹ représente un radical qui est sélectionné parmi le groupe alkyle en C₁-C₈, arylalkyle en C₅-C₁₅ et aryle en C₄-C₁₄, avec l'obligation que :
R¹ présente une masse molaire de 200 ou moins.

4. Procédé selon l'une au moins des revendications 1 à 3, **caractérisé en ce que** D représente un radical 1,1'-biphényl-2,2'-diyle non substitué ou substitué de formule (VI) 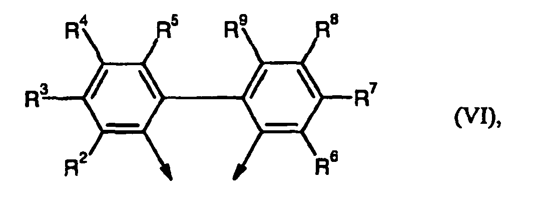 ou un radical 1,1'-binaphtyl-2,2'-diyle non substitué ou substitué de formule (VII) 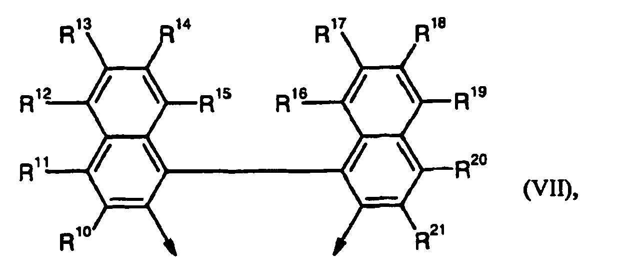 dans lesquels les radicaux
R² à R²⁰ sont sélectionnés respectivement indépendamment les uns des autres parmi le groupe hydrogène, fluor, chlore, brome, cyano, hydroxy protégé, alkyle en C₁-C₁₂, halogénoalkyle en C₁-C₁₂, alcoxy en C₁-C₁₂, alkylthio en C₁-C₈, formyle libre ou protégé, aryle en C₄-C₁₄, tri (alkyle en C₁-C₈)siloxyle ou des radicaux de formule (VIII)
**A-B-E-F** **(VIII),**
dans laquelle, indépendamment les uns des autres :
A est absent ou représente un radical alkylène en C₁-C₈ et
B est absent ou représente de l'oxygène, du soufre ou NR²¹,
où
R²¹ représente de l'hydrogène, de l'alkyle en C₁-C₁₂ ou de l'aryle en C₄-C₁₄ et
E représente un groupe carbonyle et
F représente R²², OR²², NHR²³ ou NR²³R²⁴,
où
R²² représente de l'alkyle en C₁-C₁₂ ou de l'aryle en C₆-C₁₀ et
R²³ et R²⁴ représentent respectivement indépendamment l'un de l'autre de l'alkyle en C₁-C₈ ou de l'aryle en C₄-C₁₄ ou NR²³R²⁴ représente ensemble un radical amino cyclique ayant 4 à 12 atomes de carbone, et respectivement deux radicaux voisins issus de R² à R²⁰ pouvant former ensemble également un cycle non aromatique et respectivement deux des radicaux issus de R² à R²⁰ pouvant en outre établir des ponts de réticulation.

5. Procédé selon l'une au moins des revendications 1 à 4, **caractérisé en ce que** des composés énantiomériquement enrichis de formule (V) sont utilisés.

6. Procédé selon l'une au moins des revendications 1 à 5, **caractérisé en ce que** les composés suivants sont préparés :
((S)-5,5'-dichloro-6,6'-diméthoxy-1,1'-biphényl-2,2'-diyl)-isopropyl-phosphite
((R)-5,5'-dichloro-6]6'-diméthoxy-1,1'-biphényl-2,2'-diyl)-isopropyl-phosphite
((R)-5,5'-dichloro-6,6'-diméthoxy-1,1'-biphényl-2,2'-diyl)-(R)-1-phényléthyl-phosphite
((R)-5,5'-dichloro-6,6'-diméthoxy-1,1'-biphényl-2,2'-diyl)-(S)-1-phényléthyl-phosphite
((S)-5,5'-dichloro-6,6'-diméthoxy-1,1'-biphényl-2,2'-diyl)-(R)-1-phényléthyl-phosphite
((S)-5,5'-dichloro-6,6'-diméthoxy-1,1'-biphényl-2,2'-diyl)-(S)-1-phényléthyle-phosphite
((S)-5,5'-dichloro-6,6'-diméthoxy-1,1'-biphényl-2,2'-diyl)-cyclohexyl-phosphite
((R)-5,5'-dichloro-6,6'-diméthoxy-1,1'-biphényl-2,2'-diyl)-cyclohexyl-phosphite
((S)-5,5'-dichloro-6,6'-diméthoxy-1,1'-biphényl-2,2'-diyl)-phényl-phosphite
((R)-5,5-dichloro-6,6'-diméthoxy-1,1'-biphényl-2,2'-diyl)-phényl-phosphite
((S)-5,5'-dichloro-6,6'-diméthoxy-1,1'-biphényl-2,2'-diyl)-2,6-diméthylphényl-phosphite
((R)-5,5-dichloro-6,6'-diméthoxy-1,1'-biphényl-2,2'-diyl)-2,6-diméthylphényl-phosphite
((S)-5,5',6,6'-tétraméthyl-3,3'-bis(tert-butyl)-1,1'-biphényl-2,2'-diyl)-isopropyl-phosphite
((R)-5,5',6,6'-tétraméthyl-3,3'-bis(tert-butyl)-1,1'-biphényl-2,2'-diyl)-isopropyl-phosphite
((S)-5,5',6,6'-tétraméthyl-3,3'-bis(tert-butyl)-1,1'-biphényl-2,2'-diyl)-(rac)-1-phényléthyl-phosphite
((R)-5,5',6,6'-tétraméthyl-3,3'-bis(tert-butyl)-1,1'-biphényl-2,2'-diyl)-(rac)-1-phényléthyl-phosphite
((S)-5,5',6,6'-tétraméthyl-3)3'-bis(tert-butyl)-1,1'-biphényl-2,2'-diyl)-(S)-1-phényléthyl-phosphite
((R)-5,5',6,6'-tétraméthyl-3,3'-bis(tert-butyl)-1,1'-biphényl-2,2'-diyl)-(S)-1-phényléthyl-phosphite
((S)-5,5',6,6-tétraméthyl-3,3'-bis(tert-butyl)-1,1'-biphényl-2,2'-diyl)-(R)-1-phényléthyl-phosphite
((R)-5,5',6,6'-tétraméthyl-3,3'-bis(tert-butyl)-1,1'-biphényl-2,2'-diyl)-(R)-1-phényléthyl-phosphite
((S)-5,5',6,6'-tétraméthyl-3,3'-bis(tert-butyl)-1,1'-biphényl-2,2'-diyl)-diphénylméthyl-phosphite
((R)-5,5',6,6'-tétraméthyl-3,3'-bis(tert-butyl)-1,1'-biphényl-2,2'-diyl)-diphénylméthyl-phosphite
((S)-5,5',6,6'-tétraméthyl-3,3'-bis(tert-butyl)-1,1'-biphényl-2,2'-diyl)-méthyl-phosphite
((R)-5,5',6,6'-tétraméthyl-3,3'-bis(tert-butyl)-1,1'-biphényl-2,2'-diyl)-méthyl-phosphite
((S)-5,5',6,6'-tétraméthyl-3,3'-bis(tert-butyl)-1,1'-biphényl-2,2'-diyl)-2,6-diméthylphényl-phosphite
((R)-5,5',6,6'-tétraméthyl-3,3'-bis(tert-butyl)-1,1'-biphényl-2,2'-diyl)-2,6-diméthylphényl-phosphite
((S)-5,5',6,6'-tétraméthyl-3,3'-bis(tert-butyl)-1,1'-biphényl-2,2'-diyl)-2,6-diiso-propylphényl-phosphite
((R)-5,5',6,6'-tétraméthyl-3,3'-bis(tert-butyl)-1,1'-biphényl-2,2'-diyl)-2,6-diiso-propylphényl-phosphite
((S)-5,5',6,6'-tétraméthyl-3,3'-bis(tert-butyl)-1,1'-biphényl-2,2'-diyl)-phényl-phosphite
((R)-5,5',6,6'-tétraméthyl-3,3'-bis(tert-butyl)-1,1'-biphényl-2,2'-diyl)-phényl-phosphite
((S)-5,5',6,6'-tétraméthyl-3,3'-bis(tert-butyl)-1,1'-biphényl-2,2'-diyl)-éthyl-phosphite
((R)-5,5',6,6'-tétraméthyl-3,3'-bis(tert-butyl)-1,1'-biphényl-2,2'-diyl)-éthyl-phosphite
((S)-5,5',6,6'-tétraméthyl-3,3'-bis(tert-butyl)-1,1'-biphényl-2,2'-diyl)-4-tert-butylphényl-phosphite
((R)-5,5',6,6'-tétraméthyl-3,3'-bis(tert-butyl)-1,1'-biphényl-2,2'-diyl)-4-tert-butylphényl-phosphite
((S)-1,1'-binaphtyl-2,2'-diyl)-isopropyl-phosphite
((R)-1,1'-binaphtyl-2,2'-diyl)-isopropyl-phosphite
((S)-1,1'-binaphtyl-2,2'-diyl)-néopentyl-phosphite
((R)-1,1'-binaphtyl-2,2'-diyl)-néopentyl-phosphite
((S)-1,1'-binaphtyl-2,2'-diyl)-phényl-phosphite
((R)-1,1'-binaphtyl-2,2'-diyl)-phényl-phosphite
((S)-1,1'-binaphtyl-2,2'-diyl)-benzyl-phosphite et
((R)-1,1'-binaphtyl-2,2'-diyl)-benzyl-phosphite.

7. Procédé selon l'une au moins des revendications 1 à 6, **caractérisé en ce que** la distillation selon l'étape b) est mise en oeuvre à une pression de 0,001 à 1000 hPa.

8. Procédé selon l'une au moins des revendications 1 à 6, **caractérisé en ce que** les composés de formule (I) obtenus selon les étapes a) à c) sont amenés à réagir en tant qu'étape d) avec des composés de métal de transition pour préparer des composés de formule (I) contenant des complexes de métal de transition.

9. Procédé selon la revendication 8, **caractérisé en ce que** les solutions de composés de formule (I), telles qu'elles sont obtenues selon l'étape c), sont utilisées directement dans l'étape d), éventuellement après séparation des matières précipitées.

10. Procédé selon la revendication 8, **caractérisé en ce que** les solutions de composés de formule (I), telles qu'elles sont obtenues selon l'étape c), sont concentrées, éventuellement après séparation des matières précipitées, et les composés de formule (I) sont à nouveau adsorbés dans du solvant et ensuite utilisés dans l'étape d).

11. Procédé selon l'une au moins des revendications 8 à 10, **caractérisé en ce que** les composés de formule (I) contenant des composés de métal de transition sont
ceux de formule (Xa) :
**[(I)₄M¹]An¹** **(Xa),**
dans laquelle :
(I) représente respectivement de manière indépendante, de manière préférée identique, un composé de formule (I) et
M¹ représente du rhodium ou de l'iridium et
An¹ représente du méthanesulfonate, du trifluorométhanesulfonate, du tétrafluoroborate, de l'hexafluorophosphate, du perchlorate, de l'hexafluoroantimonate, du tétra(bis-3,5-trifluorométhyl-phényle)borate ou du tétraphénylborate ou
ceux de formule (Xb) :
**[(I)₂L₂M¹]An¹** **(Xb),**
dans laquelle :
(I) représente respectivement de manière indépendante un composé de formule (I) et
M¹ représente du rhodium, de l'iridium et
An¹ représente du méthanesulfonate, du trifluorométhanesulfonate, du tétrafluoroborate, de l'hexafluorophosphate, du perchlorate, de l'hexafluoroantimonate, du tétra(bis-3,5-trifluorométhylphényl)borate ou du tétraphénylborate et
L représente respectivement un alcène en C₂-C₁₂, ou
L₂ représente de manière commune un diène en C₄-C₁₂ et
ceux de formule (XI) :
**[(I)₄Hal₂M¹₂]** **(XI),**
dans laquelle :
(I) représente respectivement de manière indépendante un composé de formule (I) et
M¹ représente du rhodium ou de l'iridium et
Hal représente du chlore, du brome ou de l'iode ou ceux de formule (XII) :
**[(I)₂(Aren)Hal₂Ru]** **(XII),**
dans laquelle :
(I) représente respectivement de manière indépendante un composé de formule (I) et
Aren représente un composé aromatique coordonné ayant 6 à 12 atomes de carbone de cycle, qui peut être en outre substitué avec jusqu'à 6 radicaux, qui sont sélectionnés respectivement indépendamment les uns des autres parmi le groupe alkyle en C₁-C₈, benzyle et phényle et
Hal représente du chlore, du brome ou de l'iode, de manière préférée du chlore ou
ceux de formule (XIII) :
**[(I)₂(XIV)Hal₂Ru]** **(XIII),**
dans laquelle :
(I) représente respectivement de manière indépendante un composé de formule (I) et
Hal représente du chlore, du brome, de l'iode, de manière préférée du chlore,
(XIV) représente des composés de formule (XIV) : 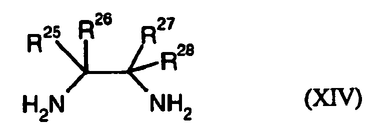
dans laquelle :
R²⁵, R²⁶, R²⁷ et R²⁸ représentent respectivement indépendamment les uns des autres de l'hydrogène, de l'alkyle en C₁-C₁₂, de l'aryle en C₄-C₁₄, ou de l'arylalkyle en C₅-C₁₅ ou respectivement deux radicaux représentent ensemble un radical alkylène en C₃-C₁₂ linéaire ou ramifié.

12. Complexes de métal de transition des formules :
**[(I)₄M¹]An¹** **(Xa),**
**[(I)₄Hal₂M¹₂]** **(XI),**
**[(I)₂(Aren)Hal₂Ru]** **(XII),**
**[(I)₂(XIV)Hal₂Ru]** **(XIII),**
dans lesquels :
(I) représente respectivement indépendamment un composé de formule (I) ayant la signification indiquée dans la revendication 1 et
M¹ représente du rhodium ou de l'iridium
An¹ représente du méthanesulfonate, du trifluorométhanesulfonate, du tétrafluoroborate, de l'hexafluorophosphate, du perchlorate, de l'hexafluororantinomate, du tétra(bis-3,5-trifluorométhylphényl)-borate ou du tétraphénylborate,
Hal représente du chlore, du brome ou de l'iode,
Aren représente un composé aromatique coordonné ayant 6 à 12 atomes de carbone de cycle, qui peut être en outre substitué avec jusqu'à 6 radicaux, qui sont sélectionnés respectivement indépendamment les uns des autres parmi le groupe alkyle en C₁-C₈, benzyle et phényle,
et
(XIV) représente des composés de formule (XIV) : 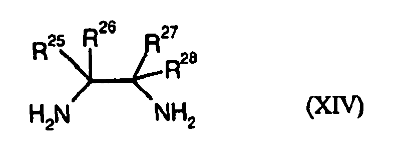
dans laquelle:
R²⁵, R²⁶, R²⁷ et R²⁸ représentent respectivement indépendamment les uns des autres de l'hydrogène, de l'alkyle en C₁-C₁₂, de l'aryle en C₄-C₁₄ ou de l'arylalkyle en C₅-C₁₅, ou respectivement deux radicaux représentent en commun un radical alkylène en C₃-C₁₂ linéaire ou ramifié.

13. Complexes de métal de transition selon la revendication 12, dans lesquels (I) est sélectionné parmi :
((S)-5,5'-dichloro-6,6'-diméthoxy-1,1'-biphényl-2,2'-diyl)-isopropyl-phosphite
((R)-5,5'-dichloro-6,6'-diméthoxy-1,1'-biphényl-2,2'-diyl)-isopropyl-phosphite
((R)-5,5'-dichloro-6,6'-diméthoxy-1,1'-biphényl-2,2'-diyl)-(R)-1-phényléthyl-phosphite
((R)-5,5'-dichloro-6,6'-diméthoxy-1,1'-biphényl-2,2'-diyl)-(S)-1-phényléthyl-phosphite
((S)-5,5'-dichloro-6,6'-diméthoxy-1,1'-biphényle-2,2'-diyl)-(R)-1-phényléthyle-phosphite
((S)-5,5'-dichloro-6,6'-diméthoxy-1,1'-biphényl-2,2'-diyl)-(S)-1-phényléthyl-phosphite
((S)-5,5'-dichloro-6,6'-diméthoxy-1,1'-biphényl-2,2'-diyl)-cyclohexyl-phosphite
((R)-5,5'-dichloro-6,6'-diméthoxy-1,1'-biphényl-2,2'-diyl)-cyclohexyl-phosphite
((S)-5,5'-dichloro-6,6'-diméthoxy-1,1'-biphényl-2,2'-diyl)-phényl-phosphite
((R)-5,5'-dichloro-6,6'-diméthoxy-1,1'-biphényl-2,2'-diyl)-phényl-phosphite
((S)-5,5'-dichloro-6,6'-diméthoxy-1,1'-biphényl-2,2'-diyl)-2,6-diméthylphényl-phosphite
((R)-5,5'-dichloro-6,6'-diméthoxy-1,1'-biphényl-2,2'-diyl)-2,6-diméthylphényl-phosphite
((S)-5,5,6,6'-tétraméthyl-3,3'-bis(tert-butyl)-1,1'-biphényl-2,2'-diyl)-isopropyl-phosphite
((R)-5,5',6,6'-tétraméthyl-3,3'-bis(tert-butyl)-1,1'-biphényl-2,2'-diyl)-isopropyl-phosphite
((S)-5,5',6,6'-tétraméthyl-3,3'-bis(tert-butyl)-1,1'-biphényl-2,2'-diyl)-(rac)-1-phényléthyl-phosphite
((R)-5,5',6,6'-tétraméthyl-3,3'-bis(tert-butyl)-1,1-biphényl-2,2'-diyl)-(rac)-1-phényléthyl-phosphite
((S)-5,5',6,6'-tétraméthyl-3,3'-bis(tert-butyl)-1,1'-biphényl-2,2'-diyl)-(S)-1-phényléthyl-phosphite
((R)-5,5',6,6'-tétraméthyl-3,3'-bis(tert-butyl)-1,1'-biphényl-2,2'-diyl)-(S)-1-phényléthyl-phosphite
((S)-5,5',6,6'-tétraméthyl-3,3'-bis(tert-butyl)-1,1'-biphényl-2,2'-diyl)-(R)-1-phényléthyl-phosphite
((R)-5,5',6,6'-tétraméthyl-3,3'-bis(tert-butyl)-1,1'-biphényl-2,2'-diyl)-(R)-1-phényléthyl-phosphite
((S)-5,5',6,6'-tétraméthyl-3,3'-bis(tert-butyl)-1,1'-biphényl-2,2'-diyl)-diphénylméthyl-phosphite
((R)-5,5',6,6'-tétraméthyl-3,3'-bis(tert-butyl)-1,1'-biphényl-2,2'-diyl)-diphénylméthyl-phosphite
((S)-5,5',6,6'-tétraméthyl-3,3'-bis(tert-butyl)-1,1'-biphényl-2,2'-diyl)-méthyl-phosphite
((R)-5,5',6,6'-tétraméthyl-3,3'-bis(tert-butyl)-1,1'-biphényl-2,2'-diyl)-méthyl-phosphite
((S)-5,5',6,6'-tétraméthyl-3,3'-bis(tert-butyl)-1,1'-biphényl-2,2'-diyl)-2,6-diméthylphényl-phosphite
((R)-5,5',6,6'-tétraméthyl-3,3'-bis(tert-butyl)-1,1'-biphényl-2,2'-diyl)-2,6-diméthylphényl-phosphite
((S)-5,5',6,6'-tétraméthyl-3,3'-bis(tert-butyl)-1,1'-biphényl-2,2'-diyl)-2,6-diiso-propylphényl-phosphite
((R)-5,5',6,6'-tétraméthyl-3,3'-bis(tert-butyl)-1,1'-biphényl-2,2'-diyl)-2,6-diiso-propylphényl-phosphite
((S)-5,5',6,6'-tétraméthyl-3,3'-bis(tert-butyl)-1,1'-biphényl-2,2'-diyl)-phényl-phosphite
((R)-5,5',6,6'-tétraméthyl-3,3'-bis(tert-butyl)-1,1'-biphényl-2,2'-diyl)-phényl-phosphite
((S)-5,5',6,6'-tétraméthyl-3,3'-bis(tert-butyl)-1,1'-biphényl-2,2'-diyl)-éthyl-phosphite
((R)-5,5',6,6'-tétraméthyl-3,3'-bis(tert-butyl)-1,1'-biphényl-2,2'-diyl)-éthyl-phosphite
((S)-5,5',6,6'-tétraméthyl-3,3'-bis(tert-butyl)-1,1'-biphényl-2,2'-diyl)-4-tert-butylphényl-phosphite
((R)-5,5',6,6'-tétraméthyl-3,3'-bis(tert-butyl)-1,1'-biphényl-2,2'-diyl)-4-tert-butylphényl-phosphite
((S)-1,1'-binaphtyl-2,2'-diyl)-isopropyl-phosphite
((R)-1,1'-binaphtyl-2,2'-diyl)-isopropyl-phosphite
((S)-1,1'-binaphtyl-2,2'-diyl)-néopentyl-phosphite
((R)-1,1'-binaphtyl-2,2'-diyl)-néopentyl-phosphite
((S)-1,1'-binaphtyl-2,2'-diyl)-phényl-phosphite
((R)-1,1'-binaphtyl-2,2'-diyl)-phényl-phosphite
((S)-1,1'-binaphtyl-2,2'-diyl)-benzyl-phosphite et
((R)-1,1'-binaphtyl-2,2'-diyl)-benzyl-phosphite.

14. Utilisation de complexes de métal de transition selon la revendication 12 ou 13 en tant que catalyseurs.

15. Utilisation de complexes de métal de transition selon la revendication 12 ou 13 dans un procédé de préparation de composés stéréo-isomériquement enrichis.

16. Procédé de préparation de composés stéréo-isomériquement enrichis grâce à des synthèses asymétriques, **caractérisé en ce que** des complexes de métal de transition selon la revendication 12 ou 13 sont utilisés en tant que catalyseurs.
